# EUROPEAN PATENT APPLICATION

(11) **EP 3 208 035 A1**
(43) Date of publication of application: **23.08.2017**
(21) Application number: 15850698.0
(22) Date of filing: 10.07.2015
(51) Int. Cl.: B23Q 3/157, B23Q 1/26, B23Q 3/155, B23Q 7/04

(54) **HORIZONTAL MACHINE TOOL**

(30) Priority: 18.10.2014 JP 2014213257
(71) Applicant: Horkos Corporation, Fukuyama-shi, Hiroshima 720-8650 (JP)
(72) Inventor: IKEDA, Kunihiro, Fukuyama-shi Hiroshima 720-8650 (JP); SEO, Yoshinori, Fukuyama-shi Hiroshima 720-8650 (JP)
(74) Representative: Kramer Barske Schmidtchen Patentanwälte PartG mbB
(86) International application number: PCT/JP2015/003495
(87) International publication number: WO 2016/059738

(57) **Abstract**

In a horizontal machine tool (101), a saddle (2) is disposed above a bed (1) so as to be movable in an X-axis direction, a main shaft head (3) is disposed above the saddle (2) so as to be movable in a Z-axis direction orthogonal to the X-axis, a main shaft (4) is rotatably axially supported by the main shaft head (3), and a table (6) on which a workpiece (W) is placed is disposed in front of the saddle (2). Also, an automatic tool changer (7) that has a tool magazine (8) holding a plurality of tools (T) and replaces the desired tool (T) held by the tool magazine (8) and the tool (T) mounted on the main shaft (4) is provided. The automatic tool changer (7) is disposed above the main shaft head (3) so that a reference surface (8s) parallel to the diameter direction of the tool magazine (8) is brought into a horizontal state parallel to the Z-axis or into a tilting state at a predetermined angle with respect to the Z-axis.

## Description

### TECHNICAL FIELD

The present invention relates to a horizontal machine tool having a horizontal main shaft on which a tool is mounted.

### BACKGROUND ART

In some horizontal machine tools having a horizontal main shaft on which a tool is mounted, the main shaft moves in orthogonal triaxial directions. With such a configuration, the accumulation of the amount of movement of each moving body directly links with the size of the machine, and thus as the amount of movement is increased, the entire machine becomes larger to increase the installation area of the machine.

On the contrary, in a horizontal machine tool in Patent Literatures 1 and 2, a main shaft moves in a horizontal X-axis direction (left-right direction) and in a horizontal Z-axis direction (front-rear direction), and a table (carriage) side on which a workpiece is placed moves in a Y-axis direction (up-down direction). With this configuration, even when the amount of movement of each moving body is increased, the entire machine is prevented from becoming larger, and the rigidity of the machine is maintained high. Also, by moving the table side in the Y-axis direction, there is an advantage that the design of the moving mechanism on the main shaft side becomes simple.

Furthermore, some machine tools include an automatic tool changer that holds a plurality of tools on a tool magazine, selects a desired tool among them, and replaces a tool mounted on a main shaft with the selected tool. For example, in Patent Literatures 1 and 2, an automatic tool changer is disposed above a main shaft head holding a main shaft. A disc-shaped tool magazine of the automatic tool changer is installed vertically so that a reference surface (disc surface) parallel to the diameter direction of the tool magazine is vertical, whereby all or part of the tool magazine protrudes upwardly of the machine tool.

On the other hand, in Patent Literature 3, in a vertical machine tool in which a main shaft is vertical, a tool magazine is installed forwardly of a main shaft head so that a reference surface (disc surface) of the tool magazine tilts with respect to an XZ plane including an X-axis (left-right axis) and a Z-axis (up-down axis). The tool magazine is moved closer to or away from the main shaft in conjunction with the up-down movement of the main shaft head, thereby performing the tool replacement between the tool magazine and the main shaft. With this, the moving distance of the main shaft head required for the tool replacement is shortened to achieve the faster tool replacement.

### CITATIONS LIST

Patent Literature 1: European Patent No. 1380382
Patent Literature 2: Japanese Patent Application Laid-Open (JP-A) No. 2009-279697
Patent Literature 3: Japanese Patent No. 2535479

### SUMMARY OF INVENTION

### TECHNICAL PROBLEMS

However, in Patent Literatures 1 and 2, since the automatic tool changer is disposed above the main shaft head so that the tool magazine is vertical, the entire machine becomes tall, resulting in poor surrounding visibility. The surrounding visibility is required to be satisfactory in a factory in which a plurality of horizontal machine tools are installed in order to achieve the satisfactory monitoring of the machine facility and the smooth cooperation of the operators.

On the other hand, in order to load or unload the workpiece into or from the machine tool, a workpiece loading/unloading device such as a gantry loader, that automatically loads or unloads the workpiece from above, is used. In this case, if the tool magazine of the automatic tool changer protrudes upward of the horizontal machine tool so as to be higher than other portions, as shown in Patent Literatures 1 and 2, it is difficult to dispose the workpiece loading/unloading device above the machine tool so as not to interfere with the tool magazine.

Moreover, in Patent Literature 3, since the main shaft head and the table are disposed on the front side of the vertical machine tool and further, the automatic tool changer including the tool magazine is disposed in front of the main shaft head, the vertical machine tool is not suitable when the workpiece is loaded or unloaded from above, and the workpiece loading/unloading device is less selective. Also, the vertical machine tool that is taller than the horizontal machine tool is not suitable for performing the monitoring of the machine facility and the cooperation of the operators by viewing the surroundings above the machine.

The object of the present invention is to provide a horizontal machine tool that can make the surrounding visibility satisfactory by reducing the height of the machine tool, can easily dispose a workpiece loading/unloading device that loads or unloads a workpiece from above, and can reduce the height of the entire machine facility including the workpiece loading/unloading device.

### SOLUTIONS TO PROBLEMS

A horizontal machine tool according to the present invention includes a bed, a saddle disposed above the bed so as to be movable in a horizontal X-axis direction, a main shaft head disposed above the saddle so as to be movable in a horizontal Z-axis direction orthogonal to the X-axis, a main shaft rotatably axially supported by the main shaft head so that a center axis thereof is parallel to the Z-axis and on which a tool is mounted, a table disposed in front of the saddle and on which a workpiece is placed, and an automatic tool changer having a tool magazine holding a plurality of tools and replacing the desired tool held by the tool magazine and the tool mounted on the main shaft. In this configuration, the automatic tool changer is disposed above the main shaft head so that a reference surface parallel to the diameter direction of the tool magazine is brought into a horizontal state parallel to the Z-axis or into a tilting state at a predetermined angle with respect to the Z-axis.

The reference surface of the tool magazine may be a component surface present in the tool magazine or an imaginary surface, but is not a curved surface. Also, in the case where the component surface present in the tool magazine is the reference surface, the component surface may include a hole or unevenness.

According to the above configuration, since the automatic tool changer is disposed above the main shaft head so that the reference surface of the tool magazine is lateral (in the horizontal state or in the tilting state), the surrounding visibility can be made satisfactory by reducing the height of the horizontal machine tool as compared with the conventional configuration in which the reference surface of the tool magazine is vertical. Consequently, for example, in a factory in which a plurality of horizontal machine tools are installed, the machine facility can be monitored satisfactorily and the smooth cooperation of the operators can be performed. Also, since the tool magazine does not protrude high upward, the workpiece loading/unloading device, such as a gantry loader, that loads or unloads the workpiece from above can be easily installed above the horizontal machine tool so as not interfere with the tool magazine.

In the horizontal machine tool of the present invention, at least except when performing the tool replacement, the angle of the reference surface of the tool magazine with respect to the Z-axis may be an acute angle. In this case, the reference surface of the tool magazine may tilt at the acute angle with respect to the Z-axis so that the replacing position side of the tool, as compared with the opposite side, is closer to the main shaft head.

The horizontal machine tool of the present invention may further include a mounting base disposed on the bed and above which the automatic tool changer is mounted, and the automatic tool changer may make the tool magazine approach the main shaft or separate the tool magazine from the main shaft according to the position of the main shaft head in the Z-axis direction, and may replace the tool held by the tool magazine and the tool mounted on the main shaft.

In the horizontal machine tool of the present invention, the automatic tool changer may have a swing shaft disposed above the mounting base and parallel to the X-axis, a holding member coupled to the swing shaft and holding a center portion of the tool magazine, and an actuator swinging the holding member and the tool magazine about the swing shaft. In place of the actuator, the automatic tool changer may be provided with a swinging mechanism swinging the holding member and the tool magazine about a swing shaft with the moving force of the main shaft head in the Z-axis direction.

In the horizontal machine tool of the present invention, the tool magazine may be formed in a disc shape, and may be provided with a plurality of holding portions radially holding the plurality of tools on an outer periphery thereof. Alternatively, the tool magazine may be formed in an oval disc shape in which one of two orthogonal diameters is longer than the other diameter, and may be provided with the plurality of holding portions holding the tools in parallel with the one diameter.

In the horizontal machine tool of the present invention, the automatic tool changer may move in the X-axis direction with the saddle.

In the horizontal machine tool of the present invention, a tunnel cover covering the main shaft head may be disposed between the tool magazine and the saddle.

In the horizontal machine tool of the present invention, at least one main shaft head, at least one main shaft, and at least one tool magazine may be disposed.

The horizontal machine tool of the present invention may further include a pillar erected on the bed in front of the saddle, and a Y-axis moving mechanism moving the table along the pillar in a vertical Y-axis direction orthogonal to both of the X-axis and the Z-axis. In that case, the pillar may be disposed on at least one of the left and right end portions on the front side of the bed.

The horizontal machine tool of the present invention may further include a workpiece loading/unloading device placing the workpiece onto the table from above or taking up the workpiece from the table from above. And, the workpiece loading/unloading device may have a track disposed above the horizontal machine tool and conveying the workpiece, a moving body moving along the track, and a work hand disposed to the moving body, holding the workpiece, and releasing the holding.

In the horizontal machine tool of the present invention, a processing region in which the workpiece is processed may be disposed in front of the saddle, a loading/unloading region in which the workpiece is loaded or unloaded may be disposed above the processing region, the table may be movable to the processing region and the loading/unloading region along the pillar erected on the bed in front of the saddle, and the track may be disposed above the loading/unloading region. In this case, the moving body may move along the track so that the work hand moves into or out of the loading/unloading region. Also, the track may be fixed to the upper portion of the pillar.

Alternatively, the track may be disposed above the processing region by omitting the loading/unloading region. In this case, the workpiece loading/unloading device may further have a Y-axis movable head interposed between the moving body and the work hand and moving in the Y-axis direction, and after the moving body moves along the track and stops above the processing region, the Y-axis movable head may move in the Y-axis direction so that the work hand moves into or out of the processing region.

Alternatively, the track may be disposed above the automatic tool changer, and the workpiece loading/unloading device may further have a movable head interposed between the moving body and the work hand and moving in a YZ plane including the Y-axis and the Z-axis. And, in the case where the loading/unloading region is disposed above the processing region, after the moving body moves along the track and stops above the automatic tool changer, the movable head may move in the YZ plane so that the work hand moves into or out of the loading/unloading region.

On the other hand, in the case where the track is passed above the automatic tool changer, the movable head is disposed in the workpiece loading/unloading device, and the loading/unloading region is omitted, after the moving body moves along the track and stops above the automatic tool changer, the movable head may move in the YZ plane so that the work hand moves into or out of the processing region.

In the case where the track passes above the processing region, the movable head may turn in the YZ plane about a turning shaft parallel to the X axis, or may move diagonally in the YZ plane.

Furthermore, the work hand may rotate the held workpiece about a first rotating axis parallel to the X-axis, or may rotate the held workpiece about a second rotating axis perpendicular to the X-axis.

### ADVANTAGEOUS EFFECTS OF INVENTION

According to the horizontal machine tool of the present invention, the surrounding visibility can be made satisfactory by reducing the height of the entire machine facility, the workpiece loading/unloading device can be easily disposed, and the height of the entire machine facility including the workpiece loading/unloading device can be reduced.

### BRIEF DESCRIPTION OF DRAWINGS

Fig. 1 is a perspective view of a horizontal machine tool according to a first embodiment of the present invention.
Fig. 2 is a side view of the horizontal machine tool in Fig. 1.
Fig. 3 is a side view of the horizontal machine tool in Fig. 1.
Fig. 4 is a side view illustrating the tool replacing state of the horizontal machine tool in Fig. 1.
Fig. 5 is a side view illustrating the tool replacing state of the horizontal machine tool in Fig. 1.
Fig. 6 is a cross-sectional view illustrating part of a swinging mechanism and part of a sliding mechanism in Fig. 1.
Fig. 7 is a perspective view of a horizontal machine tool according to a second embodiment of the present invention.
Fig. 8 is a side view of the horizontal machine tool in Fig. 7.
Fig. 9 is a side view of the horizontal machine tool in Fig. 7.
Fig. 10 is a side view illustrating the tool replacing state of the horizontal machine tool in Fig. 7.
Fig. 11 is a side view illustrating the tool replacing state of the horizontal machine tool in Fig. 7.
Fig. 12 is a side view of a horizontal machine tool according to a third embodiment of the present invention.
Fig. 13 is a perspective view of the horizontal machine tool in Fig. 12.
Fig. 14 is a perspective view illustrating the workpiece loading/unloading state of the horizontal machine tool in Fig. 12.
Fig. 15 is a perspective view illustrating the workpiece loading/unloading state of the horizontal machine tool in Fig. 12.
Fig. 16 is a perspective view illustrating the workpiece rotating state of the horizontal machine tool in Fig. 12.
Fig. 17 is a side view illustrating the workpiece rotating state of the horizontal machine tool in Fig. 12.
Fig. 18 is a perspective view of a horizontal machine tool according to a fourth embodiment of the present invention.
Fig. 19 is a side view of the horizontal machine tool in Fig. 18.
Fig. 20 is a perspective view illustrating the workpiece loading/unloading state of the horizontal machine tool in Fig. 18.
Fig. 21 is a perspective view illustrating the workpiece loading/unloading state of the horizontal machine tool in Fig. 18.
Fig. 22 is a side view illustrating the workpiece loading/unloading state of the horizontal machine tool in Fig. 18.
Fig. 23 is a side view illustrating the workpiece rotating state of the horizontal machine tool in Fig. 18.
Fig. 24 is a perspective view of a horizontal machine tool according to a fifth embodiment of the present invention.
Fig. 25 is a side view of a horizontal machine tool according to a sixth embodiment of the present invention.
Fig. 26 is a perspective view of a horizontal machine tool according to a seventh embodiment of the present invention.
Fig. 27 is a side view of a horizontal machine tool according to an eighth embodiment of the present invention.
Fig. 28 is a side view of a horizontal machine tool according to a ninth embodiment of the present invention.
Fig. 29 is a side view of a horizontal machine tool according to a tenth embodiment of the present invention.
Fig. 30 is a side view of a horizontal machine tool according to an eleventh embodiment of the present invention.
Fig. 31 is a side view of a horizontal machine tool according to a twelfth embodiment of the present invention.
Fig. 32 is a perspective view of a horizontal machine tool according to a thirteenth embodiment of the present invention.
Fig. 33 is a perspective view of a horizontal machine tool according to a fourteenth embodiment of the present invention.

### DESCRIPTION OF EMBODIMENTS

Hereinafter, embodiments of the present invention will be described with reference to the drawings. In the drawings, the same portions or the corresponding portions are denoted by the same reference numerals.

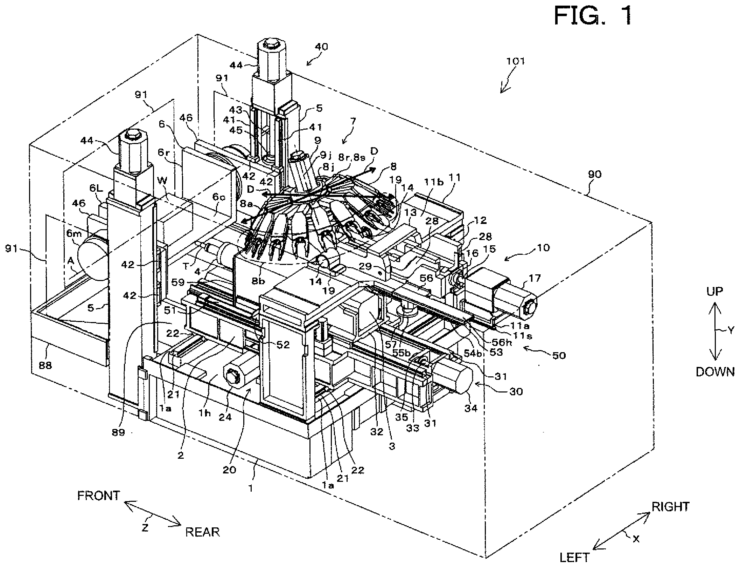

First, the configuration and structure of a first embodiment will be described with reference to Figs. 1 to 6.

A horizontal machine tool 101 of the first embodiment is, for example, a machine tool for cutting a workpiece W. This also applies to horizontal machine tools of other embodiments described later.

The horizontal machine tool 101 is covered with a cover 90 to prevent scattering of chips and cutting fluid that come out while the workpiece W is subjected to cutting processing. In Figs. 1 to 5, the cover 90 is indicated by a two-dot chain line so that the structure of the horizontal machine tool 101 can be easily understood. Windows 91 are disposed in the left and right side surfaces and the front surface of the cover 90. Each window 91 is opened and closed by, for example, a transparent plate (not illustrated).

The above-mentioned cover 90 and windows 91 are also disposed in the horizontal machine tools of other embodiments described later. The shapes of the cover 90 and the windows 91 are designed according to the shapes of the horizontal machine tools.

The horizontal machine tool 101 includes a bed 1, a saddle 2, a main shaft head 3, a main shaft 4, columns 5, a table 6, and an automatic tool changer 7.

The bed 1 is formed in a rectangular shape seen from above. The saddle 2 is disposed on the bed 1 in an area rearward from the center of the bed. The saddle 2 is formed in a substantially rectangular parallelepiped shape that is long in a Z-axis direction (front-rear direction) seen from above. Also, the saddle 2 is movable in an X-axis direction (left-right direction) by an X-axis moving mechanism 20. The X-axis and the Z-axis are located in a horizontal plane, and are orthogonal to each other.

The X-axis moving mechanism 20 includes guide rails 21, sliders 22, an X-axis ball screw (not illustrated), and a driving motor 24.

As illustrated in Fig. 1, a pair of reference base surfaces 1a are protruded on the bed 1 at predetermined intervals in the Z-axis direction. The guide rails 21 are respectively fixed onto the respective reference base surfaces 1a in parallel with the X-axis. The respective sliders 22 are engaged with the respective guide rails 21 so as to be movable in the X-axis direction. That is, the guide rails 21 and the sliders 22 are respectively disposed in pairs. The saddle 2 is fixed onto the respective sliders 22.

The driving motor 24 and the X-axis ball screw are disposed between the guide rails 21. The driving motor 24 is installed on the bed 1 so that a rotating shaft thereof (not illustrated) is parallel to the X-axis.

Although not illustrated, the X-axis ball screw is disposed between the bed 1 and the saddle 2 in parallel with the X-axis. One end of the X-axis ball screw is coupled to the rotating shaft of the driving motor 24, and the other end of the X-axis ball screw is rotatably supported by the bed 1 through a bearing. Also, a nut is threaded to the X-axis ball screw, and the nut is coupled to the saddle 2.

The driving motor 24 rotates in the forward or reverse direction to rotate the X-axis ball screw, so that the saddle 2 is guided by the guide rails 21 and the sliders 22 to move straightly in the X-axis direction.

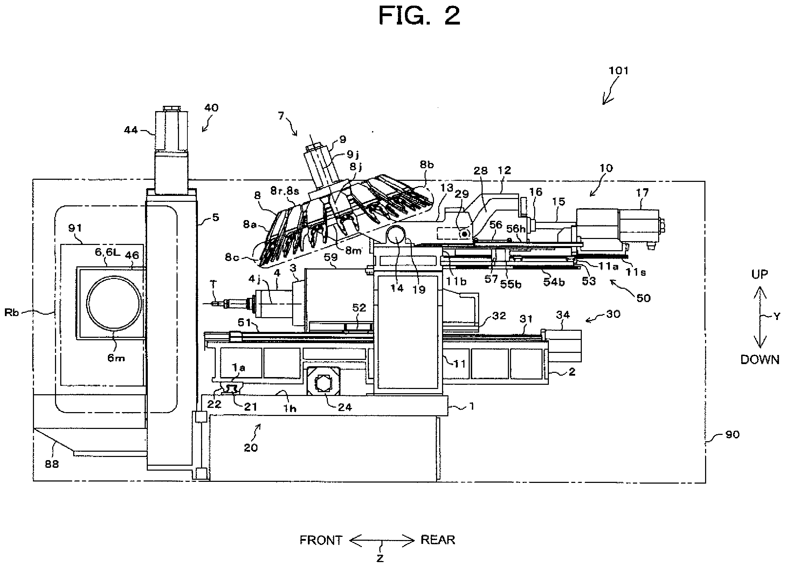

The main shaft head 3 is disposed above the saddle 2. The main shaft head 3 is movable in the Z-axis direction by a Z-axis moving mechanism 30. The main shaft 4 is rotatably supported on the front side of the main shaft head 3 so that a center axis 4j (Fig. 2) is parallel to the Z-axis. A tool T is mounted on the main shaft 4 so as to protrude forward. The main shaft head 3 includes a driving source or mechanism (not illustrated) that rotates the main shaft 4 about an axis thereof.

As illustrated in Fig. 1, the Z-axis moving mechanism 30 includes guide rails 31, sliders 32, a Z-axis ball screw 33, a driving motor 34, and a nut 35.

A pair of guide rails 31 are disposed at predetermined intervals in the X-axis direction, and are fixed onto the saddle 2 in parallel with the Z-axis. The respective sliders 32 engage with the respective guide rails 31 so as to be movable in the Z-axis direction. The main shaft head 3 is fixed onto the respective sliders 32. The driving motor 34 is fixed to the rear surface of the saddle 2 so that a rotating shaft thereof (not illustrated) is parallel to the Z-axis.

The Z-axis ball screw 33 is disposed in parallel with the Z-axis. Although not illustrated, one end of the Z-axis ball screw 33 is rotatably supported by the saddle 2 through a bearing and the like in the saddle 2. The other end of the Z-axis ball screw 33 is coupled to the rotating shaft of the driving motor 34. Also, a nut 35 is threaded to the Z-axis ball screw 33, and the nut 35 is fixed to the main shaft head 3.

The driving motor 34 rotates in the forward or reverse direction to rotate the Z-axis ball screw 33, so that the main shaft head 3 is guided by the guide rails 31 and the sliders 32 to move straightly in the Z-axis direction.

A pair of columns 5 are erected in front of the saddle 2 at predetermined intervals in the X-axis direction. Specifically, the columns 5 are fixed to the left and right end portions on the front side (front surface) of the bed 1. Each column 5 is an example of a "pillar" of the present invention. The columns 5 may be fixed to the left and right end portions of the upper surface on the front side of the bed 1.

The table 6 on which the workpiece W is placed is disposed in front of the saddle 2 and the columns 5. The table 6 is movable along the columns 5 in a vertical Y-axis direction (up-down direction) orthogonal to both of the X-axis and the Z-axis by a Y-axis moving mechanism 40.

The Y-axis moving mechanism 40 includes guide rails 41, sliders 42, Y-axis ball screws 43, driving motors 44, nuts 45, and carriages 46. These components 41 to 46 are provided for each column 5. In Fig. 1, the guide rails 41, the Y-axis ball screw 43, and the nut 45 that are disposed in the column 5 on the left side are not illustrated.

Two guide rails 41 are fixed in parallel with the Y-axis onto the opposite left and right side surfaces of each column 5 at predetermined intervals in the Z-axis direction. The respective sliders 42 engage with the respective guide rails 41 so as to be movable in the Y-axis direction. Each carriage 46 is fixed to the left and right sliders 42. Each carriage 46 is movable in the Y-axis direction together with the sliders 42.

The table 6 is held by the pair of carriages 46. Specifically, in Fig. 1, a right end portion 6r of the table 6 is held by the carriage 46 on the right side, and a left end portion 6L of the table 6 is held by the carriage 46 on the left side. The workpiece W is fixed onto a horizontal surface 6c of the table 6 through a jig (not illustrated).

The respective driving motors 44 are fixed to the upper surfaces of the respective columns 5 so that the rotating shafts thereof (not illustrated) are parallel to the Y-axis. The respective driving motors 44 are covered by one component, not illustrated, of the cover 90 from above. A speed reduction mechanism may be provided integrally in each driving motor 44.

Each Y-axis ball screw 43 is disposed in a recess between the guide rails 41 of each column 5 in parallel with the Y-axis. Although not illustrated, one end of each Y-axis ball screw 43 is coupled to the rotating shaft of each driving motor 44, and the other end of each Y-axis ball screw 43 is rotatably supported by each column 5 through a bearing and the like. Also, each nut 45 is threaded to each Y-axis ball screw 43, and the nut 45 is fixed to each carriage 46.

The respective driving motors 44 synchronously rotate in the forward or reverse direction to rotate the respective Y-axis ball screws 43, so that the respective carriages 46 are guided by the guide rails 41 and the sliders 42, and synchronously move straightly in the Y-axis direction. Then, the table 6 held by the carriages 46 and the workpiece W placed on the table 6 move straightly in the Y-axis direction. As illustrated in Fig. 2 and the like, a processing region Rb in which the workpiece W is processed by a tool T mounted on the main shaft 4 is disposed near the front sides of the columns 5. The size of the processing region Rb is set according to the size of the workpiece W (this also applies to other embodiments described later).

The table 6 is rotatable about an A-axis (Fig. 1) parallel to the X-axis. Specifically, a driving source 6m, such as a motor, is coupled to the left end portion 6L of the table 6. The left end portion 6L and the right end portion 6r of the table 6 are held by the respective carriages 46 so as to be rotatable about the A-axis. The left end portion 6L of the table 6 rotates about the A-axis with the driving force of the driving source 6m, so that the horizontal portion 6c and the right end portion 6r follow and rotate about the A-axis, and the workpiece W placed on the table 6 also rotates about the A-axis.

In place of the above configuration that rotates the table 6 about the A-axis, a configuration that rotates the table about a B-axis (not illustrated) parallel to the Y-axis may be adopted. Also, both of the configuration that rotates the table about the A-axis and the configuration that rotates the table about the B-axis may be adopted (so-called 5-axis control type horizontal machine tool).

In any case, a through hole 89 for discharging chips is disposed just below the table 6 (below the processing region Rb). The through hole 89 is formed in an oil pan 88 installed on the front side of the bed 1. A chip collecting device such as a chip conveyor, not illustrated, is installed on the floor surface below the bed 1 for discharging the chips to the outside of the machine so as not to stack the chips on the bed 1.

The automatic tool changer 7 is disposed above the main shaft head 3. The automatic tool changer 7 has a tool magazine 8, a motor 9, and a swinging mechanism 10.

The tool magazine 8 is formed in a disc shape. A plurality of holding portions 8b radially holding tools T are formed on the end of an outer periphery 8a bent downwardly of the tool magazine 8. The motor 9 is mounted at the center of the upper portion of the tool magazine 8. A rotating axis 8j of the tool magazine 8 and a rotating axis 9j of the motor 9 are coupled so as to be coaxial. The tool magazine 8 and the motor 9 are covered by one component, not illustrated, of the cover 90 from above. A speed reduction mechanism may be provided integrally in the motor 9.

The tool magazine 8 rotates about the rotating axis 8j with the driving force of the motor 9, and a desired tool T, among tools T held by the holding portions 8b, is sent out to a replacing position 8c (Fig. 2) on the most front side of the tool magazine 8.

As illustrated in Fig. 1, a gate-shaped mounting base 11 is erected on the rear end portion on the bed 1. An upper surface 11b of the mounting base 11 is horizontal, and extends in the X-axis direction. The width and height of the mounting base 11 are set so that, inside the mounting base 11, the saddle 2 can move in the X-axis direction and the main shaft head 3 can move in the Z-axis direction. The automatic tool changer 7 is mounted to the upper surface portion 11b through the swinging mechanism 10.

The swinging mechanism 10 includes a slide block 12, a holding member 13, swing shafts 14, a ball screw 15, a nut 16, and a driving motor 17.

Horizontal protrusions 11a are disposed in the lower portion at the center of the upper surface portion 11b of the mounting base 11 so as to protrude rearward horizontally. The driving motor 17 is fixed above the rear ends of the horizontal protrusions 11a through brackets, not illustrated. The rotating shaft of the driving motor 17 (not illustrated) is parallel to the Z-axis. A speed reduction mechanism is provided integrally in the driving motor 17.

Also, the slide block 12, the holding member 13, and the swing shafts 14 are disposed at the center of the upper surface portion 11b. A pair of swing shafts 14 are disposed at predetermined intervals in the X-axis direction. The respective swing shafts 14 are mounted above the upper surface portion 11b through axially supporting members 19 in parallel with the X-axis.

The holding member 13 is formed in a frame shape seen from above. One end of each swing shaft 14 engages with the center of the holding member 13 in a penetrating state. With this configuration, the holding member 13 is supported on the mounting base 11 so as to be swingable about the swing shafts 14.

As illustrated in Fig. 2 and the like, a center portion 8m of the tool magazine 8 is fixed on the front upper end portion of the holding member 13. That is, the holding member 13 holds, on its front upper end portion, the center portion 8m of the tool magazine 8 from below. With this, the automatic tool changer 7 is disposed above the main shaft head 3 so that a reference surface 8s parallel to the diameter direction of the tool magazine 8 is disposed diagonally laterally. Specifically, in this example, except when the tool replacement is performed, the automatic tool changer 7 is disposed above the main shaft head 3 so that the angle of the reference surface 8s of the tool magazine 8 with respect to the Z-axis is an acute angle (45° or less). It is noted that although the reference surface 8s in the above example is brought into a tilting state at the predetermined angle with respect to the Z-axis, the reference surface 8s may be brought into a horizontal state parallel to the Z-axis. This also applies to other embodiments described later.

The diameter direction of the tool magazine 8 is the direction of the diameter perpendicular to the rotating axis 8j of the tool magazine 8. An example of the diameter of the tool magazine 8 is indicated by thick double-headed arrow D in Fig. 1, but since the tool magazine 8 is formed in a disc shape, the diameter direction of the tool magazine 8 is the direction of 360° about the rotating axis 8j. And, the reference surface 8s of the tool magazine 8 includes the upper surface of a base member 8r of the tool magazine 8 parallel to the diameter direction of the tool magazine 8 (that is, perpendicular to the rotating axis 8j). That is, the reference surface 8s is a present component surface of the tool magazine 8. Also, the reference surface 8s has unevenness, but is not a curved surface. As another example, an imaginary surface parallel to the diameter direction of the tool magazine 8 may be the reference surface.

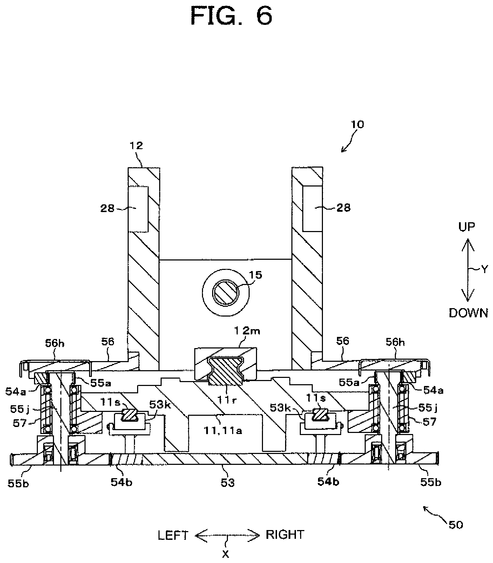

The slide block 12 is inserted inside the holding member 13 from the rear side. As illustrated in Fig. 6, an engaging recess 12m is disposed in the lower portion of the slide block 12 in parallel with the Z-axis.

Fig. 6 is a cross-sectional view illustrating the swinging mechanism 10 and part of a sliding mechanism 50 described later. Specifically, Fig. 6 illustrates a state where the peripheral portion of the slide block 12 is sectioned along an XY plane including the X-axis and the Y-axis and the cross section is seen from the rear side.

The engaging recess 12m of the slide block 12 engages with a guide rail 11r. The guide rail 11r is disposed in parallel with the Z-axis from the horizontal protrusions 11a toward the upper surface portion 11b (Fig. 1) of the mounting base 11. The slide block 12 is movable in the Z-axis direction along the guide rail 11r.

As illustrated in Fig. 2 and the like, the ball screw 15 is disposed above the horizontal protrusions 11a in parallel with the Z-axis. Although not illustrated, one end of the ball screw 15 is rotatably supported by the mounting base 11 through a bearing and the like. The other end of the ball screw 15 is coupled to the rotating shaft of the driving motor 17. Also, the nut 16 is threaded to the ball screw 15, and the nut 16 is fixed to the slide block 12.

As illustrated in Figs. 1 and 6, cam grooves 28 are formed in the left and right side surfaces of the slide block 12. As illustrated in Fig. 2, the cam grooves 28 are formed in a substantially S shape so as to extend forward horizontally from the upper portion of the rear end of the slide block 12, to extend diagonally downward, and to extend horizontally in the lower portion of the slide block 12. A pair of cam rollers 29 are mounted on the left and right inner side surfaces of the holding member 13 so as to be opposite (the cam roller 29 of the right inner side surface of the holding member 13 is not illustrated). The respective cam rollers 29 engage with the respective cam grooves 28.

The driving motor 17 rotates in the forward or reverse direction to rotate the ball screw 15, so that the slide block 12 moves straightly in the Z-axis direction as illustrated in Figs. 2 to 5. Then, the cam rollers 29 roll in the cam grooves 28, and the holding member 13 and the tool magazine 8 swing in a YZ plane including the Y-axis and the Z-axis about the swing shafts 14. The driving motor 17 is an example of an "actuator" of the present invention.

As described above, the tool magazine 8 swings with the driving force of the driving motor 17, so that the tool replacing position 8c of the tool magazine 8 approaches or separates from the main shaft 4. The automatic tool changer 7 replaces the tool T mounted on the main shaft 4 with the desired tool T held by the tool magazine 8 in such a manner that the tool magazine 8 is made to approach or to be separated from the main shaft 4 according to the position of the main shaft head 3 in the Z-axis direction.

A tunnel cover 59 covering the main shaft 4 and the main shaft head 3 is disposed between the tool magazine 8 and the saddle 2. Aside from the main shaft head 3, the tunnel cover 59 is movable in the Z-axis direction by the sliding mechanism 50. An inner diameter of the tunnel cover 59 is set to a size in which the main shaft head 3 is movable in the Z-axis direction. An outer diameter of the tunnel cover 59 is set to a size in which the tunnel cover 59 does not interfere with the tool T held by the tool magazine 8.

As illustrated in Figs. 1, 2, and 6, the sliding mechanism 50 includes guide rails 51, sliders 52, a horizontal member 53, racks 54a and 54b, pinion gears 55a and 55b, brackets 56, bearing members 57, and some components of the swinging mechanism 10. Some components of the swinging mechanism 10 include the slide block 12, the ball screw 15, the nut 16, and the driving motor 17. The guide rails 51, the sliders 52, the racks 54a, the racks 54b, the pinion gears 55a, the pinion gears 55b, the brackets 56, and the bearing members 57 are respectively disposed in pairs on the left and right sides (the guide rail 51 and the slider 52 on the right side are not illustrated).

The guide rails 51 are fixed on the left and right end portions of the saddle 2 in parallel with the Z-axis. The respective sliders 52 engage with the respective guide rails 51 so as to be movable in the Z-axis direction. The respective sliders 52 are fixed to the left and right side surfaces of the tunnel cover 59.

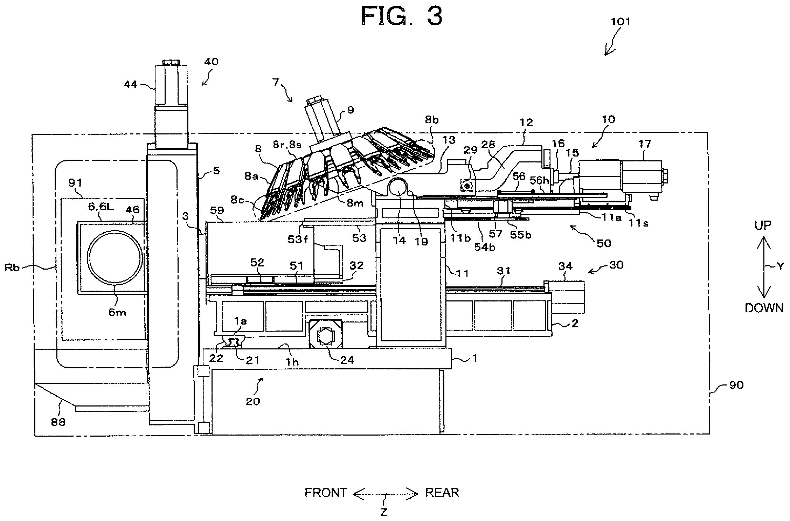

The horizontal member 53 passes inside the mounting base 11, and is disposed in parallel with the Z-axis. As illustrated in Fig. 3, a front end portion 53f of the horizontal member 53 is coupled to the upper portion of the rear end of the tunnel cover 59. As illustrated in Fig. 6, a pair of left and right engaging recesses 53k are disposed in the upper portion of the horizontal member 53. A pair of left and right guide rails 11s are disposed in the lower portions of the respective horizontal protrusions 11a of the mounting base 11. The respective guide rails 11s engage with the respective engaging recesses 53k. Therefore, the horizontal member 53 and the tunnel cover 59 are movable in the Z-axis direction along the guide rails 11s.

The racks 54b are disposed on the left and right side surfaces of the horizontal member 53 in parallel with the Z-axis. The edges of the respective racks 54b direct to the left and right sides (the opposite side of the ball screw 15). The brackets 56 are respectively fixed to the left and right side surfaces of the slide block 12. As illustrated in Fig. 2 and the like, horizontal portions 56h of the respective brackets 56 extend rearward. As illustrated in Fig. 6, the racks 54a are disposed in the lower portions of the respective horizontal portions 56h. The edges of the respective racks 54a direct to the opposite side of the edges of the racks 54b (the ball screw 15 side).

The pinion gears 55a and 55b are mounted to the respective horizontal protrusions 11a of the mounting base 11 through the bearing members 57. The pinion gears 55a and 55b have common rotating axes 55j, and the rotating axes 55j are parallel to the Y-axis. The small pinion gears 55a above the bearing members 57 engage with the racks 54a. The large pinion gears 55b below the bearing members 57 engage with the racks 54b.

As illustrated in Figs. 2 to 5, when the slide block 12 moves straightly in the Z-axis direction with the driving force of the driving motor 17, the brackets 56 and the racks 54a follow to move straightly in the same direction as the slide block 12, and the small pinion gears 55a rotate. At this time, the large pinion gears 55b rotate in the same direction as the small pinion gears 55a to send the racks 54b and the horizontal member 53 in the direction opposite the slide block 12. Consequently, the tunnel cover 59 moves straightly in the direction opposite the slide block 12 with the horizontal member 53.

Next, the operation of the horizontal machine tool 101 during the tool replacement will be described.

As illustrated in Fig. 2, when the main shaft head 3 is located at the origin point position on the Z-axis, the slide block 12 protrudes largely from the rear side of the holding member 13, and that the cam rollers 29 engage with the lower portions of the cam grooves 28. With this, the rear portion of the holding member 13 rearwardly of the swing shafts 14 is substantially horizontal, and the tool magazine 8 is held diagonally laterally at the upper position that is most separated from the main shaft 4, by the front upper end portion of the holding member 13. Specifically, the reference surface 8s of the tool magazine 8 tilts at the acute angle of 45° or less with respect to the Z-axis so that the front portion of the tool magazine 8 (the replacing position 8c side), as compared with the rear portion of the tool magazine 8 (the opposite side of the replacing position 8c), is closer to the main shaft head 3. The angle of the reference surface 8s of the tool magazine 8 with respect to the Z-axis in this state is defined as "full separating angle".

As illustrated in, for example, Fig. 3, the maximum separating angle of the tool magazine 8 is maintained while the main shaft head 3 is located forwardly of the origin point position on the Z-axis. In the state of Fig. 3, the main shaft head 3 and the main shaft 4 have been moved forward by the Z-axis moving mechanism 30, so that the tool T mounted on the main shaft 4 has reached the processing region Rb near the front sides of the columns 5 (not illustrated).

On the other hand, when the main shaft head 3 is moved rearward from the origin point position on the Z-axis by the Z-axis moving mechanism 30, the driving motor 17 is driven to move the slide block 12 and the racks 54a (Fig. 6) forward in parallel with the Z-axis. Consequently, the cam rollers 29 (Fig. 2) roll rearward in the cam grooves 28, the rear portion of the holding member 13 is pushed up, the holding member 13 and the tool magazine 8 swing about the swing shafts 14, and the front portion of the tool magazine 8 approaches the main shaft 4. Also, the small pinion gears 55a (Fig. 6) rotate with the forward movement of the racks 54a, the large pinion gears 55b rotate in the same direction, and the racks 54b and the horizontal member 53 are sent rearward in parallel with the Z-axis. As a result, the tunnel cover 59 (Fig. 2) moves rearward with the horizontal member 53 contrary to the slide block 12.

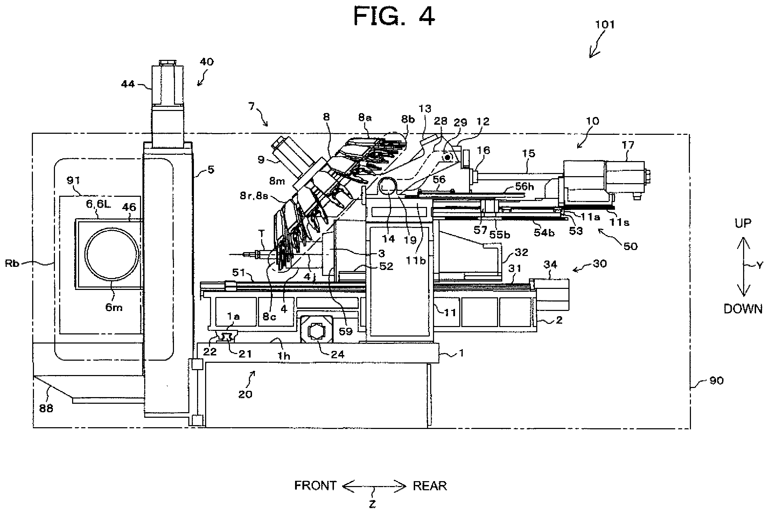

Then, as illustrated in Fig. 4, when the main shaft head 3 moves rearward to the tool transferring position, the cam rollers 29 engage with the upper portions of the cam grooves 28, the replacing position 8c of the tool magazine 8 most approaches the main shaft 4, and the center axis of the tool holding portion of the holding portion 8b at the replacing position 8c coincides with the center axis 4j of the main shaft 4. The angle of the reference surface 8s of the tool magazine 8 with respect to the Z-axis (e.g., 45°) in this state is defined as "full approaching angle". As the tool magazine 8 swings with the driving of the driving motor 17 so as to approach the main shaft 4, the tunnel cover 59 moves rearward, so that the tool magazine 8 and the tunnel cover 59 do not come into contact with each other.

When the tool T mounted on the main shaft 4 is replaced, in a state where the main shaft head 3 is at the origin point position on the Z-axis (Fig. 2) or at the position forwardly thereof (Fig. 3), the main shaft head 3 is moved with the saddle 2 by the X-axis moving mechanism 20 to the tool replacing position on the X-axis (the origin point on the X-axis = center). Also, in the tool magazine 8 at the full separating angle, the motor 9 is driven to locate the empty holding portion 8b not holding the tool T to the replacing position 8c.

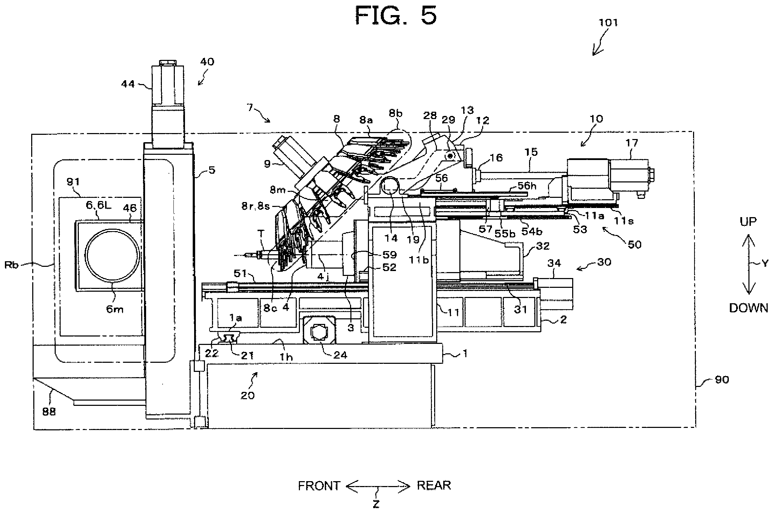

Next, as illustrated in Fig. 4, while the main shaft head 3 is moved rearward to the tool transferring position on the Z-axis by the Z-axis moving mechanism 30, the tool magazine 8 is swung to the full approaching angle by the driving motor 17. With this, the tool T mounted on the main shaft 4 engages with the empty holding portion 8b of the tool magazine 8. When the main shaft head 3 is further moved rearward by the Z-axis moving mechanism 30 from this state, the tool T is transferred from the main shaft 4 to the holding portion 8b, as illustrated in Fig. 5. When the main shaft head 3 moves rearward to the tool transferring position or to the position rearwardly thereof, the driving motor 17 stops, and the slide block 12 and the tunnel cover 59 also stop.

After the tool T is transferred from the main shaft 4 to the tool magazine 8 (Fig. 5), the motor 9 is driven to move the desired tool T to the replacing position 8c so that the center axis of the tool T coincides with the center axis 4j of the main shaft 4. Then, when the main shaft head 3 is moved forward to the tool transferring position by the Z-axis moving mechanism 30, the tool T at the replacing position 8c is mounted on the main shaft 4 (Fig. 4).

Thereafter, the main shaft head 3 is moved forward by the Z-axis moving mechanism 30. Also, the slide block 12 and the racks 54a are moved rearward by the driving motor 17. With this, the cam rollers 29 roll forward in the cam grooves 28, the rear portion of the holding portion 13 is pushed down, the holding member 13 and the tool magazine 8 swing about the swing shafts 14, and the front portion of the tool magazine 8 separates from the main shaft 4 and the tool T mounted on the main shaft 4. Also, the small pinion gears 55a rotate with the rearward movement of the racks 54a, the large pinion gears 55b rotate in the same direction, and the racks 54b and the horizontal member 53 are sent forward in parallel with the Z-axis. As a result, the tunnel cover 59 moves forward with the horizontal member 53, contrary to the slide block 12. Thus, the tool replacement is completed.

According to the above first embodiment, the automatic tool changer 7 is disposed above the main shaft head 3 so that the reference surface 8s of the tool magazine 8 is located laterally. Specifically, except when the tool replacement is performed, the angle of the reference surface 8s of the tool magazine 8 with respect to the Z-axis is the acute angle (Figs. 2 and 3). Therefore, as compared with the conventional configuration in Patent Literatures 1 and 2 in which the reference surface of the tool magazine is vertical, the height of the horizontal machine tool 101 is reduced so that the surrounding visibility can be made satisfactory. As a result, for example, in a factory where a plurality of horizontal machine tools 101 are installed, the machine facility can be monitored satisfactorily, and the smooth cooperation of the operators can be performed.

Also, the horizontal machine tool 101 can be installed in a factory having a low ceiling by reducing the height of the horizontal machine tool 101. Also, a special trailer on which a tall machine is loaded is not required during the transportation of the horizontal machine tool 101, so that the transporting cost can be lowered. Further, even in a factory having a small conveying-in opening, the horizontal machine tool 101 can be conveyed into the factory without disassembling.

Moreover, since the tool magazine 8 does not protrude high upward, a workpiece loading/unloading device, such as a gantry loader, that loads or unloads the workpiece W from above can be easily installed above the horizontal machine tool 101 so as not to interfere with the tool magazine 8.

In the conventional automatic tool changer disclosed in Patent Literatures 1 and 2, unless the tool magazine is moved up and down, or without a tool replacing arm, the tool replacement cannot be performed between the tool magazine and the main shaft. On the other hand, in the automatic tool changer 7 of the first embodiment, the tool magazine 8 is swung by the driving motor 17, with the movement of the main shaft head 3 in the Z-axis direction, so as to approach or to separate from the main shaft 4, and the tool T mounted on the main shaft 4 are replaced with the desired tool T held by the tool magazine 8. Therefore, it is unnecessary to employ an additional tool replacing arm, and thus the tool replacement can be performed fast between the tool magazine 8 and the main shaft 4. In particular, the reference surface 8s of the tool magazine 8 tilts so that the replacing position 8c side of the tool T (front portion), as compared with the opposite side (rear portion), is closer to the main shaft head 3, whereby the time until the replacing position 8c comes closest to the main shaft 4 during the swinging of the tool magazine 8 is shortened, and the tool replacement can be performed faster.

In the first embodiment, since the width of the main shaft head 3 and the saddle 2 in the left-right direction is narrow, the height of the holding member 13 supporting the tool magazine 8 can be easily reduced to the extent that the tool T held by the tool magazine 8 does not interfere with the main shaft head 3 and the saddle 2. Accordingly, the height of the horizontal machine tool 101 near the tool magazine 8 can be also easily reduced.

In the first embodiment, since there is not a mechanism moving in the Y-axis direction on the main shaft 4 side, the main shaft 4 and the processing region Rb can be set low. Also, since the table 6 is movable in the Y-axis direction, the loading height of the workpiece W can be freely set even when the heights of the workpiece W and the jig fixing the workpiece W are different, so that it is not necessary to change the design of the table 6 and the jig. Furthermore, by setting the loading height low, a stool is not required when the operator manually mounts the workpiece W onto the table 6, so that the mounting operation can be easily performed.

In the first embodiment, the table 6 is supported in front of the columns 5, and the processing region Rb is disposed in front of the columns 5. Therefore, the operator can easily perform various operations, such as the loading or unloading of the workpiece W, the mounting and removal, and the maintenance, from the front of the horizontal machine tool 101 to the processing region Rb. Also, by disposing the workpiece loading/unloading device in front of the horizontal machine tool 101, the interference between the workpiece loading/unloading device and the automatic tool changer 7 can be easily avoided.

When the workpiece loading/unloading device is disposed in front of the horizontal machine tool 101, the entire machine facility becomes larger in the front-rear direction. On the other hand, in the first embodiment, the columns 5 are erected near the front side of the saddle 2, and the carriages 46 holding the table 6 are supported on the opposite sides of the columns 5, so that the size of the bed 1 in the front-rear direction can be made smaller. Consequently, the size in the front-rear direction of the entire machine facility including the horizontal machine tool 101 and the workpiece loading/unloading device installed in front of the horizontal machine tool 101 can be made smaller.

In the first embodiment, since the columns 5 are erected on the left and right end portions of the front surface of the bed 1, the supporting areas of the columns 5 by the bed 1 can be increased to enhance the rigidity of the columns 5.

Furthermore, in the first embodiment, the tunnel cover 59 covering the main shaft head 3 is disposed between the tool magazine 8 and the saddle 2. Therefore, any foreign substance that adheres onto the tool T held by the tool magazine 8 and falls down can be prevented from adhering onto the machine element, such as the rotating mechanism for the main shaft 4 provided in the main shaft head 3.

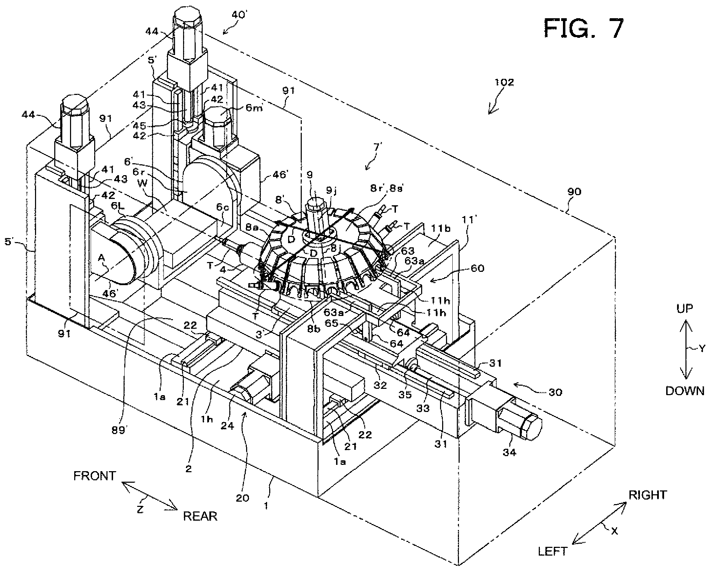

Next, the constitution and configuration of a second embodiment will be described with reference to Figs. 7 to 11.

A horizontal machine tool 102 of the second embodiment is different from the horizontal machine tool 101 of the first embodiment, mainly in the peripheral configuration of columns 5' and a table 6' and the peripheral configuration of an automatic tool changer 7'.

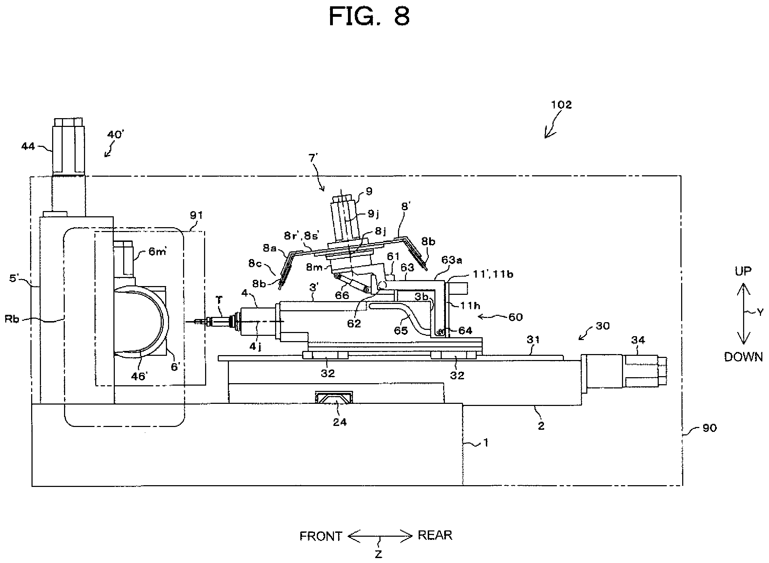

As illustrated in Fig. 7, in the horizontal machine tool 102, a pair of columns 5' are erected on the left and right corners of the bed 1 on the front side of the main shaft 4. The table 6' on which the workpiece W is placed is disposed between the columns 5' and the saddle 2. The table 6' is movable in the Y-axis direction along the columns 5' by a Y-axis moving mechanism 40'. With this configuration, the processing region Rb (Fig. 8 and the like) in which the workpiece W is processed by the tool T mounted on the main shaft 4 is disposed near the rear sides of the columns 5'. Each column 5' is an example of a "pillar" of the present invention.

As illustrated in Fig. 7, the Y-axis moving mechanism 40' includes the guide rails 41, the sliders 42, the Y-axis ball screws 43, the driving motors 44, the nuts 45, and carriages 46'. These components 41 to 46' are provided for each column 5'. In Fig. 7, the nut 45 disposed in the column 5' on the left side is not illustrated.

Two guide rails 41 are fixed to the rear surface of each column 5' opposite the saddle 2 at a predetermined interval in the X-axis direction in parallel with the Y-axis. The respective sliders 42 are engaged with the respective guide rails 41 so as to be movable in the Y-axis direction. The respective carriages 46' are fixed to the respective sliders 42, and are disposed on the rear surface sides of the respective columns 5'.

The table 6' is held by the pair of carriages 46'. Specifically, the right end portion 6r of the table 6' is held by the carriage 46' on the right side, and the left end portion 6L of the table 6' is held by the carriage 46' on the left side. The workpiece W is fixed onto the horizontal surface 6c of the table 6' through a jig (not illustrated).

The driving motors 44 are fixed to the upper surfaces of the respective columns 5' so that the rotating shafts thereof (not illustrated) are parallel to the Y-axis. The driving motors 44 are covered by one component, not illustrated, of the cover 90 from above.

Each Y-axis ball screw 43 is disposed in a recess between the guide rails 41 of each column 5' in parallel with the Y-axis. Although not illustrated, one end of each Y-axis ball screw 43 is coupled to the rotating shaft of each driving motor 44, and the other end of each Y-axis ball screw 43 is rotatably supported by each column 5' through a bearing and the like. Also, each nut 45 is threaded to each Y-axis ball screw 43, and the nut 45 is fixed to each carriage 46'.

The respective driving motors 44 synchronously rotate in the forward or reverse direction to rotate the respective Y-axis ball screws 43, so that the respective carriages 46' are guided by the guide rails 41 and the sliders 42, and synchronously move straightly in the Y-axis direction. Then, the table 6' and the workpiece W on the table 6' move straightly in the Y-axis direction.

The table 6' is rotatable about the A-axis (Fig. 7) parallel to the X-axis. Specifically, a driving source 6m', such as a motor, is disposed on the right end portion 6r of the table 6'. The left end portion 6L and the right end portion 6r of the table 6' are held by the carriages 46' so as to be rotatable about the A-axis. The right end portion 6r of the table 6' rotates about the A-axis with the driving force of the driving source 6m', so that the horizontal portion 6c and the left end portion 6L follow and rotate about the A-axis, and the workpiece W on the table 6' also rotates about the A-axis.

A through hole 89' for discharging chips between the table 6' and the saddle 2 is disposed at the location just below the table 6' of the bed 1. A chip collecting device, not illustrated, is disposed on the floor surface below the bed 1.

The automatic tool changer 7' is disposed above a main shaft head 3'. The automatic tool changer 7' has a tool magazine 8', the motor 9, and a swinging mechanism 60.

The tool magazine 8' is formed in a disc shape. The plurality of holding portions 8b radially holding the tools T are formed on the end of the outer periphery 8a of the tool magazine 8'. The motor 9 is mounted at the center of the upper portion of the tool magazine 8'. The rotating axis 8j of the tool magazine 8' and the rotating axis 9j of the motor 9 are coupled to be coaxial.

The tool magazine 8' rotates about the rotating axis 8j with the driving force of the rotation motor 9, and the desired tool T, among the tools T held by the holding portions 8b, is sent out to the replacing position 8c (Fig. 8 and the like) on the most front side of the tool magazine 8'.

A gate-shaped mounting base 11' is erected on the rear end on the bed 1. The automatic tool changer 7' is mounted to the upper surface 11b of the mounting base 11' through the swinging mechanism 60.

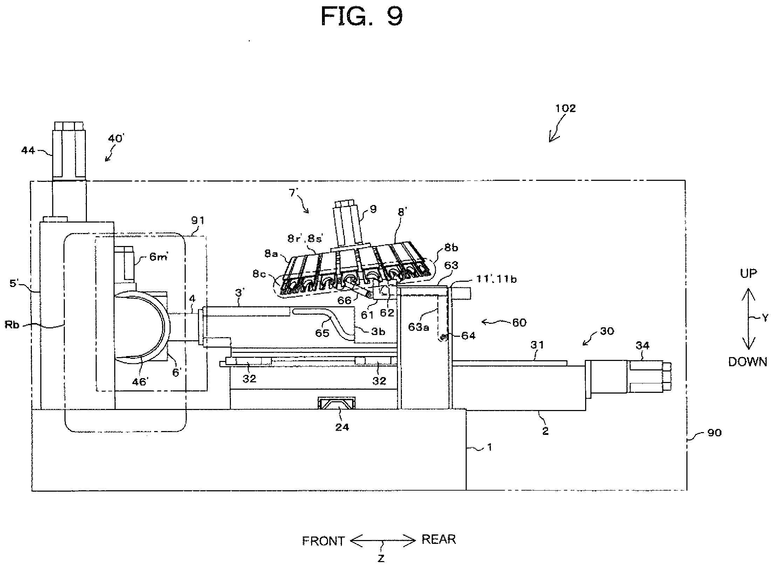

The swinging mechanism 60 swings the tool magazine 8' of the automatic tool changer 7' without using an actuator, such as a motor. As illustrated in Figs. 8 and 9, the swinging mechanism 60 includes a bracket 61, a swing shaft 62, a lift link 63, cam rollers 64, cam grooves 65, and a biasing member 66.

As illustrated in Fig. 8, the bracket 61 is fixed at the center of the upper surface 11b of the mounting base 11' so as to protrude forward. The swing shaft 62 is rotatably supported by the bracket 61 in parallel with the X-axis. As illustrated in Fig. 7, the lift link 63 has two L-shaped arms 63a. As illustrated in Fig. 8, both ends of the swing shaft 62 are fixed on the front ends of the respective arms 63a.

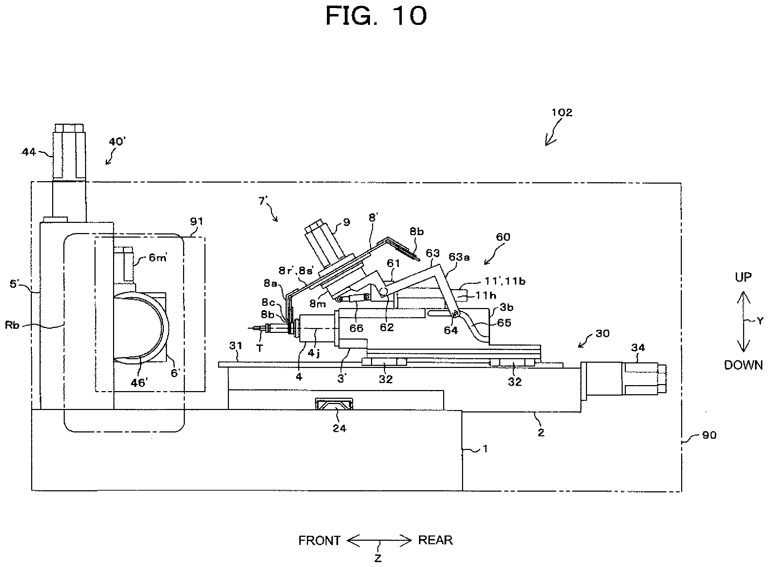

The lift link 63 holds, at its upper end, the center portion 8m of the tool magazine 8'. In Figs. 8 and 10, in order to illustrate the configuration of the tool magazine 8', the holding portions 8b other than the holding portions 8b at the front and rear of the tool magazine 8' and the left side of the mounting base 11' are not illustrated. The lift link 63 is an example of a "holding member" of the present invention.

One end of the biasing member 66 is engaged at the center portion 8m of the tool magazine 8'. The other end of the biasing member 66 is engaged at the bracket 61. The biasing member 66 includes an air spring. The biasing member 66 biases the tool magazine 8' upward, and holds the tool magazine 8' so that a reference surface 8s' parallel to the diameter direction of the tool magazine 8' (for example, the direction of a diameter D in Fig. 7) has a full separating angle with respect to the Z-axis (the acute angle of 45° or less) (Fig. 8). With such a holding configuration, the automatic tool changer 7' is disposed above the main shaft head 3' so that the reference surface 8s' of the tool magazine 8' is disposed diagonally laterally.

In this example, the reference surface 8s' of the tool magazine 8' includes the flat upper surface of a base member 8r' parallel to the diameter direction of the tool magazine 8' (that is, perpendicular to the rotating axis 8j). Hence, the reference surface 8s' is the present component surface of the tool magazine 8'. As another example, an imaginary surface parallel to the diameter direction of the tool magazine 8' may be the reference surface.

As illustrated in Fig. 7, the horizontal portions of the respective arms 63a of the lift link 63 are placed on the upper surface 11b of the mounting table 11', and the vertical portions of the respective arms 63a are fitted into square holes 11h formed in the upper surface 11b. The size of the square holes 11h is larger than the diameter of the arms 63a.

The cam rollers 64 are mounted on the lower ends of the respective arms 63a so as to be opposite. The cam grooves 65 engaging with the cam rollers 64 are formed in the left and right side surfaces of the main shaft head 3' (the cam groove 65 in the right side surface of the main shaft head 3' is not illustrated). As illustrated in Fig. 8 and the like, the cam grooves 65 are formed in a substantially S shape so as to extend slightly horizontally forward from the lower end of a step 3b of the main shaft head 3', to extend diagonally upward, and to extend horizontally at a predetermined length on the upper end of the main shaft head 3'.

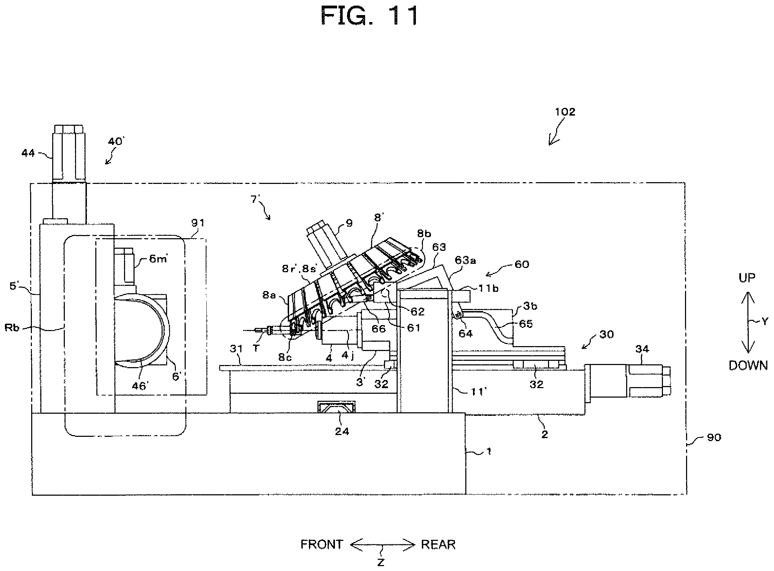

When the main shaft head 3' is moved straightly in the Z-axis direction by the Z-axis moving mechanism 30, the cam rollers 64 of the swinging mechanism 60 roll in the cam grooves 65. Then, the lift link 63 and the tool magazine 8' swing in the YZ plane including the Y-axis and the Z-axis about the swing shaft 62 (Figs. 10 and 11). That is, the swinging mechanism 60 swings the tool magazine 8' about the swing shaft 62 with the moving force of the main shaft head 3' in the Z-direction.

Next, the operation of the horizontal machine tool 102 will be described.

As illustrated in Fig. 8, when the main shaft head 3' is located at the origin point position on the Z-axis, the cam rollers 64 are located at the positions displaced rearward from the cam grooves 65, and the tool magazine 8' is held diagonally laterally at the upper position that is furthermost from the main shaft 4, by the biasing member 66. The angle of the reference surface 8s' of the tool magazine 8' with respect to the Z-axis in this state is defined as "full separating angle".

When the main shaft head 3' is located forwardly of the origin point position on the Z-axis, the full separating angle of the tool magazine 8' is maintained, as illustrated in, for example, Fig. 9. In the state of Fig. 9, the main shaft head 3' and the main shaft 4 have been moved forward by the Z-axis moving mechanism 30, so that the tool T mounted on the main shaft 4 has reached the processing region Rb near the rear sides of the columns 5' (not illustrated).

When the tool T mounted on the main shaft 4 is replaced, the main shaft head 3' is moved, from the state in Fig. 8 or 9, by the X-axis moving mechanism 20 with the saddle 2 to the tool replacing position on the X-axis. Also, in the tool magazine 8' at the full separating angle, the motor 9 is driven to position the empty holding portion 8b not holding the tool T to the replacing position 8c.

Next, when the main shaft head 3' is moved rearward by the Z-axis moving mechanism 30, after the main shaft head 3' passes through the origin point position on the Z-axis, the cam rollers 64 are fitted into the cam grooves 65. When the main shaft head 3' is further moved rearward, the cam rollers 64 roll diagonally upward along the cam grooves 65, the arms 63a are pushed up, and the lift link 63 swings about the swing shaft 62. The tool magazine 8' also swings with the swinging of the lift link 63, and the front portion of the tool magazine 8' (replacing position 8c) approaches the main shaft 4.

Then, as illustrated in Fig. 10, when the main shaft head 3' is moved rearward to the tool transferring position by the Z-axis moving mechanism 30, the cam rollers 64 are positioned at the upper portions of the cam grooves 65, so that the replacing position 8c of the tool magazine 8' comes closest to the main shaft 4. At this time, the center axis of the tool holding portion of the holding portion 8b at the replacing position 8c coincides with the center axis 4j of the main shaft 4, so that the empty holding portion 8b at the replacing position 8c engages with the tool T mounted on the main shaft 4. The angle of the reference surface 8s' of the tool magazine 8' with respect to the Z-axis in this state is defined as "full approaching angle". Also, at this time, the biasing member 66 is pressed by the tool magazine 8', and is then brought into a compressed state.

When the main shaft head 3' is further moved rearward in a state where the tool T mounted on the main shaft 4 engages with the holding portion 8b of the tool magazine 8', the tool T is transferred from the main shaft 4 to the holding portion 8b, as illustrated in Fig. 11. In this process, since the cam rollers 64 roll horizontally in the upper portions of the cam grooves 65, the full approaching angle of the reference surface 8s' of the tool magazine 8' is maintained.

Thereafter, the motor 9 is driven to move the desired tool T in the tool magazine 8' to the replacing position 8c, so that the center axis of the tool T coincides with the center axis 4j of the main shaft 4. Then, the main shaft head 3' is moved forward to the tool transferring position by the Z-axis moving mechanism 30, whereby the tool T at the replacing position 8c is mounted on the main shaft 4 (Fig. 10).

When the main shaft head 3' is further moved forward by the Z-axis moving mechanism 30, the cam rollers 64 roll diagonally downward along the cam grooves 65, the arms 63a are pushed down, and the lift link 63 swings about the swing shaft 62. The tool magazine 8' also swings with the swinging of the lift link 63, so that the front portion of the tool magazine 8' separates from the main shaft 4.

Then, when the main shaft head 3' moves forward from the origin point position on the Z-axis, the cam rollers 64 separate from the cam grooves 65, the biasing member 66 extends, and the tool magazine 8' is held at the full separating angle, as illustrated in Fig. 8. Thus, the tool replacement is completed.

According to the second embodiment, the tool magazine 8' is swung by the swinging mechanism 60 with the movement of the main shaft head 3' in the Z-axis direction, so that the tool T mounted on the main shaft 4 are replaced with the desired tool T held by the tool magazine 8'. Therefore, it is unnecessary to additionally employ a tool replacing arm and a swinging actuator, and the tool replacement can be performed fast between the tool magazine 8' and the main shaft 4.

Also, in the second embodiment, the table 6' and the processing region Rb are disposed between the saddle 2 and the columns 5'. Therefore, for example, by disposing the workpiece loading/unloading device above the processing region Rb, the entire machine facility can be prevented from becoming larger in the front-rear direction to suppress an increase in the installation space.

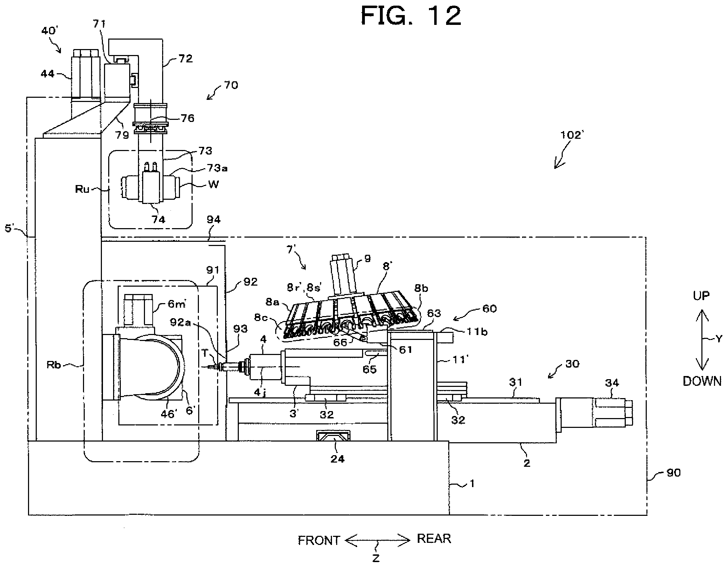

Next, the constitution and configuration of a third embodiment will be described with reference to Figs. 12 to 17.

In the third embodiment, a workpiece loading/unloading device 70 is provided in a horizontal machine tool 102'. The workpiece loading/unloading device 70 is a gantry loader loading or unloading the workpiece W from above.

The cover 90 and the columns 5' of the horizontal machine tool 102' are designed in consideration of the configuration of the workpiece loading/unloading device 70. The respective portions of the horizontal machine tool 102' other than this are the same as the horizontal machine tool 102 of the second embodiment.

As illustrated in Fig. 12 and the like, the processing region Rb in which the workpiece W is processed is disposed near the lower portions of the columns 5' of the horizontal machine tool 102'. Also, a loading/unloading region Ru in which the workpiece W is loaded or unloaded is disposed near the upper portions of the columns 5' and above the processing region Rb. The columns 5' are formed to be high in the Y-axis direction to the extent that the loading/unloading region Ru is disposed on the upper side, and the processing region Rb is disposed on the lower side. The Y-axis moving mechanism 40' moves the table 6' along the columns 5' to the processing region Rb and the loading/unloading region Ru.

The workpiece loading/unloading device 70 is disposed above the automatic tool changer 7' and near the loading/unloading region Ru on the table 6' side of the horizontal machine tool 102'. The workpiece loading/unloading device 70 includes a track 71, a moving body 72, a work hand 73, and a driving unit 74.

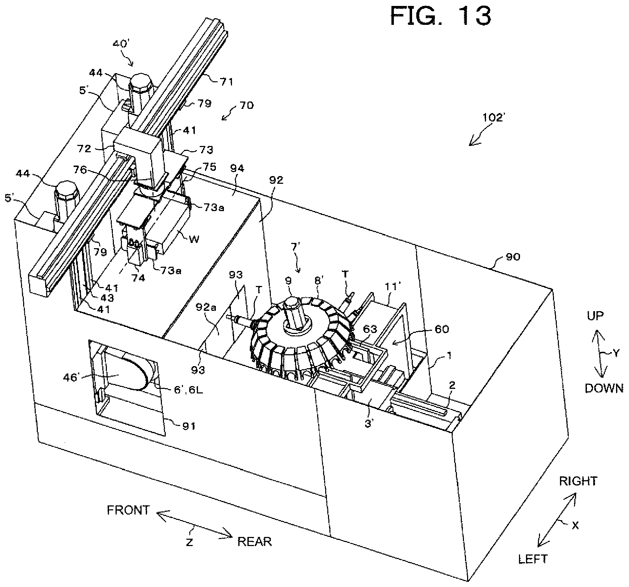

The track 71 conveys the workpiece W to the horizontal machine tool 102' and the outside, and is disposed laterally above the loading/unloading region Ru. The track 71 is fixed above the columns 5' through brackets 79. The track 71 is extended in the X-axis direction, but in Figs. 13 to 16, part of the track 71 is illustrated. The non-illustrated portion of the track 71 may be fixed to a strut erected on the floor surface.

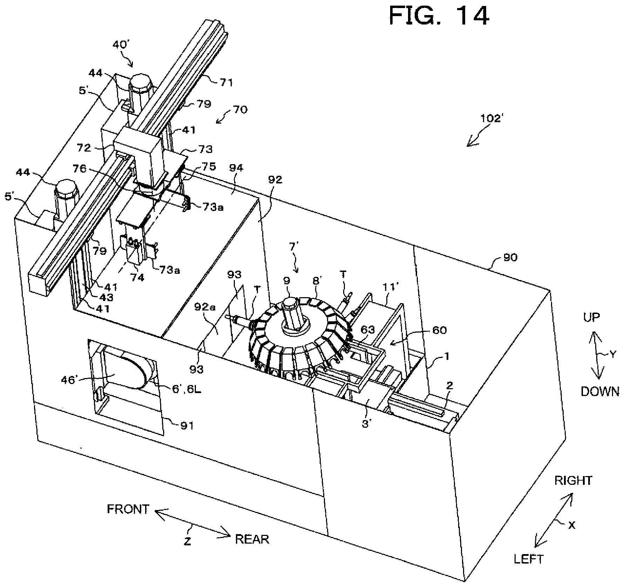

The moving body 72 is engaged with the track 71, and moves along the track 71 or stops by conveying means, not illustrated. The work hand 73 is mounted downward on the moving body 72, holds the workpiece W by chucks 73a, and releases the holding. Figs. 12, 13, and 15 to 17 illustrate a state where the workpiece W is held by the chucks 73a of the work hand 73, and Fig. 14 illustrates a state where nothing is held by the chucks 73a.

With the above configuration, the moving body 72 of the workpiece loading/unloading device 70 moves along the track 71, and stops at the loading/unloading region Ru. That is, the loading/unloading region Ru of the horizontal machine tool 102' is disposed in a conveying path in which the workpiece loading/unloading device 70 conveys the workpiece W.

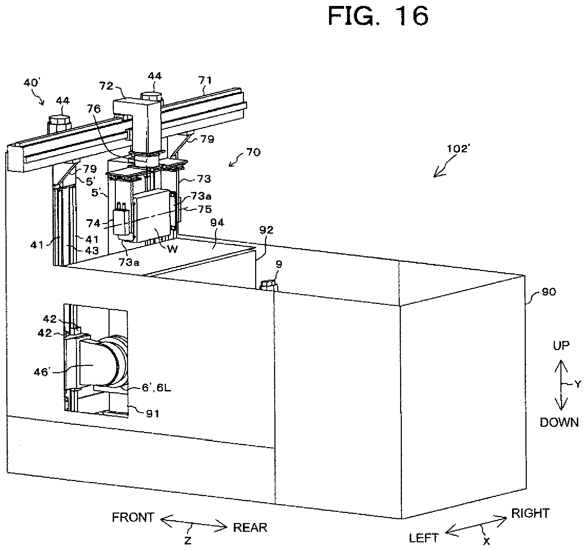

The driving unit 74 mounted on the side surface of the work hand 73 includes a motor. The chucks 73a of the work hand 73 rotate about a rotating axis 75 (Fig. 13) parallel to the X-axis with the driving force of the driving unit 74. A state where the chucks 73a are rotated 90° about the rotating axis 75 from the state in Figs. 12 and 13 is illustrated in Fig. 16. The workpiece W held by the chucks 73a also rotates about the rotating axis 75 with the rotation of the chucks 73a to change the posture and direction of the workpiece W. The rotating axis 75 is an example of a "first rotating axis" of the present invention.

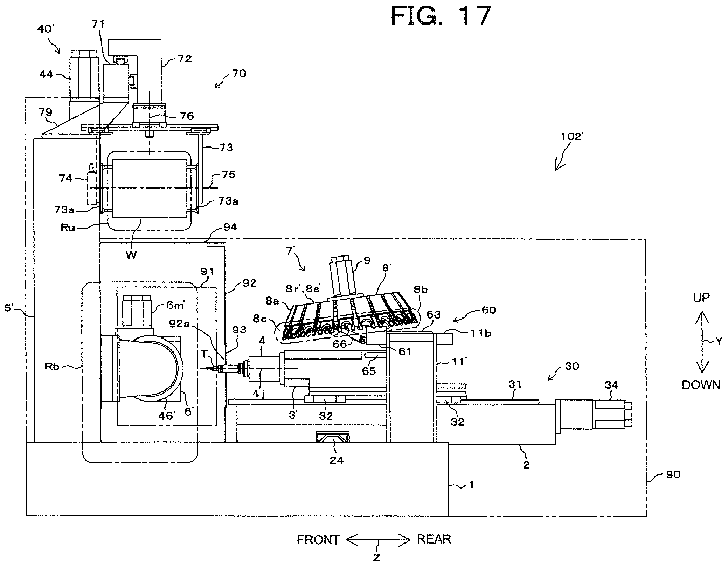

A rotating mechanism (not illustrated) rotating the work hand 73 about a rotating axis 76 perpendicular to the X-axis and parallel to the Y-axis is incorporated in the base of the work hand 73. A state where the work hand 73 is rotated 90° about the rotating axis 76 from the state in Fig. 16 is illustrated in Fig. 17. The workpiece W held by the work hand 73 also rotates about the rotating axis 76 with the rotation of the work hand 73 to change the posture and direction of the workpiece W. The rotating axis 76 is an example of a "second rotating axis" of the present invention.

The cover 90 covers the horizontal machine tool 102', but does not cover the workpiece loading/unloading device 70. In Fig. 12, to easily see the inner configuration, the cover 90 is indicated by two-dot chain lines.

The windows 91 are disposed in the left and right side surfaces of the cover 90. The window may also be disposed in the front surface of the cover 90. The cover 90 includes an XY plane cover 92 and an XZ plane cover 94.

The XY plane cover 92 is disposed on the plane including the X-axis and the Y-axis, and sections the table 6' side and the main shaft 4 side. An opening 92a (Fig. 13) passing the main shaft 4 and the tool T mounted on the main shaft 4 in the Z-axis direction is formed in the XY plane cover 92. The opening 92a is opened or closed by moving double doors 93 in the X-axis direction. Such the XY plane cover 92 and such the doors 93 are also disposed in the the cover 90 in the first and second embodiments.

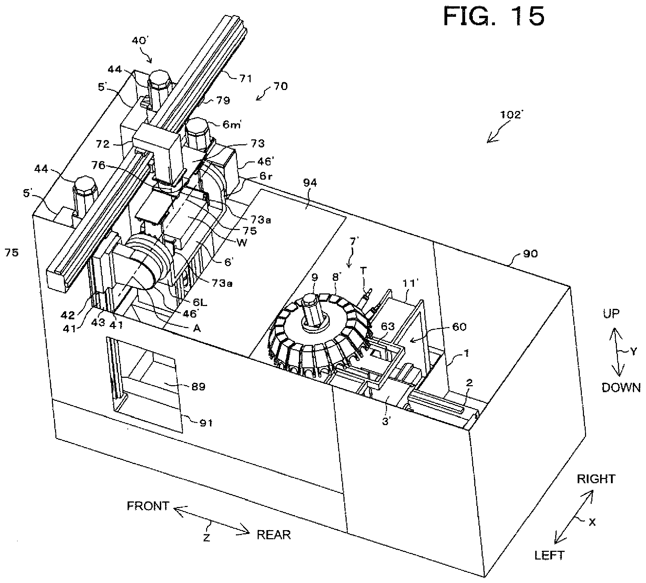

The XZ plane cover 94 is disposed on the plane including the X-axis and the Z-axis, and is movable in the Z-axis direction. As illustrated in Figs. 12 to 14, 16, and 17, when the XZ plane cover 94 is positioned at the closing position, the upper side of the processing region Rb is closed. When the XZ plane cover 94 is moved rearward in parallel with the Z-axis, and is then positioned at the opening position, as illustrated in Fig. 15, the upper side of the processing region Rb is opened, and the table 6' and the workpiece W are reciprocatable between the processing region Rb and the loading/unloading region Ru. In Fig. 13 and the like, although the rear portion of the cover 90 is opened to the upper side, the rear portion of the cover 90 is also covered by the separate member, not illustrated, of the cover 90.

When unloading the workpiece W placed on the table 6', first, the moving body 72 of the workpiece loading/unloading device 70 is moved along the track 71 to the upper side of the loading/unloading region Ru, and is positioned at the loading/unloading position in the X-axis direction (Fig. 13). With this, the work hand 73 moves into the loading/unloading region Ru. Also, the XZ plane cover 94 is opened to release the fixing of the workpiece W on the table 6' by a jig. Then, the table 6' is raised by the Y-axis moving mechanism 40', and is positioned at the loading/unloading position in the Y-axis direction in the loading/unloading region Ru, and the workpiece W is held by the chucks 73a of the work hand 73 (Fig. 15). Thereafter, the table 6' is lowered downwardly of the work hand 73 by the Y-axis moving mechanism 40', and the workpiece W is taken up from the table 6' by the work hand 73. Then, the moving body 72 is moved along the track 71 toward the next machine tool, and the work hand 73 is retracted from the loading/unloading region Ru. The XZ plane cover 94 is closed after the table 6' is lowered to the processing region Rb.

When loading the workpiece W and placing it onto the table 6', first, the moving body 72 is moved along the track 71 to the upper side of the loading/unloading region Ru in a state where the workpiece W is held by the work hand 73 of the workpiece loading/unloading device 70, and is positioned at the loading/unloading position in the X-axis direction (Figs. 12 and 13). With this, the work hand 73 and the workpiece W move into the loading/unloading region Ru. Next, the XZ plane cover 94 is opened, and the table 6' is raised by the Y-axis moving mechanism 40', and is positioned at the loading/unloading position in the Y-axis direction in the loading/unloading region Ru. Then, the holding of the workpiece W by the chucks 73a of the work hand 73 is released, and the workpiece W is placed onto the table 6' (Fig. 15). Thereafter, the table 6' is lowered to the processing region Rb by the Y-axis moving mechanism 40', and the XZ plane cover 94 is then closed. Also, the workpiece W on the table 6' is fixed by the jig. Furthermore, the moving body 72 is moved along the track 71 to retract the work hand 73 from the loading/unloading region Ru.

According to the above third embodiment, the processing region Rb is disposed near the lower portions of the columns 5', and the loading/unloading region Ru is disposed above the processing region Rb. Therefore, by moving the table 6' in the Y-axis direction by the Y-axis moving mechanism 40', the workpiece W on the table 6' can be positioned in the processing region Rb and the loading/unloading region Ru. Also, since the loading/unloading region Ru is disposed in the conveying path of the work hand 73, by moving the table 6' to the loading/unloading region Ru, it is not necessary to move the work hand 73 in the Y-axis direction, so that the height of the workpiece loading/unloading device 70 can be reduced, and the number of operation steps during the loading or unloading can be reduced. As a result, the height of the entire machine facility including the horizontal machine tool 102' and the workpiece loading/unloading device 70 can be reduced, so that the surrounding visibility can be made more satisfactory, and the operation and configuration of the workpiece loading/unloading device 70 can be simplified.

In the third embodiment, after the table 6' is moved to the loading/unloading region Ru by the Y-axis moving mechanism 40', the workpiece W is taken up from the table 6' by the workpiece loading/unloading device 70, whereby the workpiece W can be conveyed to the next machine tool. Also, the workpiece W conveyed by the workpiece loading/unloading device 70 is placed onto the table 6', whereby the workpiece W can be loaded into the processing region Rb.

In the third embodiment, since the workpiece loading/unloading device 70 is placed on the upper portions of the columns 5', the workpiece W can be conveyed through above the horizontal machine tool 102' while the interference with the automatic tool changer 7' is prevented. In particular, since the track 71 is fixed above the columns 5', it is not necessary to additionally erect the strut for installing the track 71 near the outside of the horizontal machine tool 102', so that the moving line of the operator can be simpler. It is noted that in the third embodiment, the method for additionally erecting the strut on the floor is not excluded. In the case where the strut is additionally erected on the floor surface without using the columns 5' to fix the track 71 to the strut, the vibration of the horizontal machine tool 102' can be prevented from extending to the workpiece conveying device 70.

In the third embodiment, since the workpiece loading/unloading device 70 is not disposed on the front side of the horizontal machine tool 102', the entire machine facility cannot become larger in the front-rear (Z-axis) direction, so that the installation space of the machine facility can be prevented from being increased.

Furthermore, in the third embodiment, the workpiece W held by the work hand 73 can be rotated about the rotating axes 75 and 76. Hence, it is possible to change freely the direction and posture of the workpiece W and re-place it onto the table 6' or convey it to another machine tool. As a result, the processing surface of the workpiece W that can be processed by the horizontal machine tool 102' and another machine tool can be increased. Moreover, it is not necessary to additionally employ a device, such as a station, for converting the posture of the workpiece W.

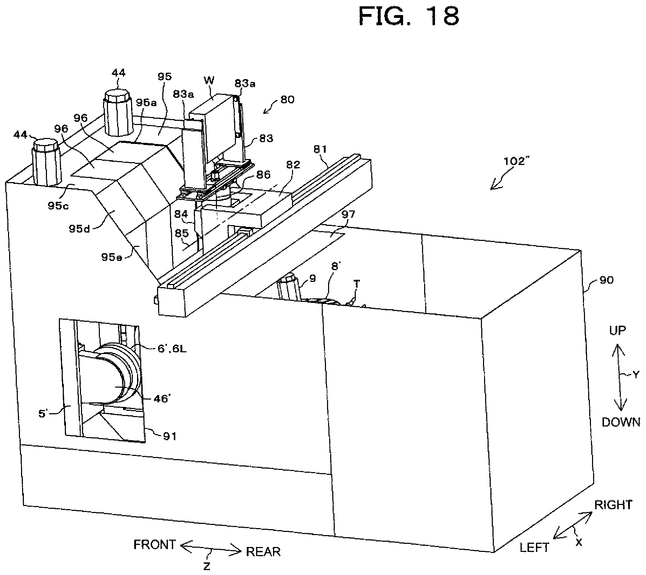

Next, the constitution and configuration of a fourth embodiment will be described with reference to Figs. 18 to 23.

In the fourth embodiment, a workpiece loading/unloading device 80 is provided in a horizontal machine tool 102". The workpiece loading/unloading device 80 is a gantry loader.

The cover 90 and the columns 5' of the horizontal machine tool 102" are designed in consideration of the configuration of the workpiece loading/unloading device 80. The respective portions of the horizontal machine tool 102" other than this are the same as the horizontal machine tool 102 of the second embodiment.

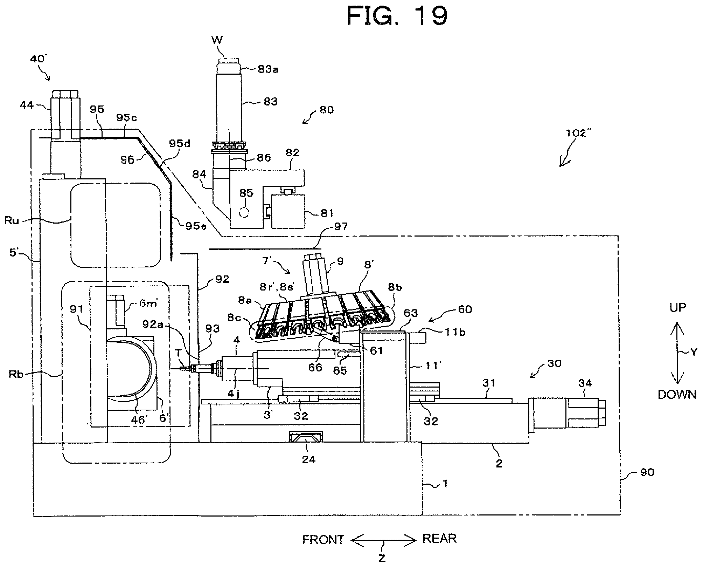

As illustrated in Fig. 19 and the like, the processing region Rb is disposed near the lower portions of the columns 5' of the horizontal machine tool 102", and the loading/unloading region Ru is disposed near the upper portions of the columns 5' and above the processing region Rb.

The workpiece loading/unloading device 80 is disposed above the automatic tool changer 7' and near the loading/unloading region Ru on the main shaft 4 side of the horizontal machine tool 102". The workpiece loading/unloading device 80 includes a track 81, a moving body 82, a work hand 83, and a turning head 84.

The track 81 conveys the workpiece W to the horizontal machine tool 102" and the outside, and is fixed to a strut, not illustrated. The strut may be erected on the bed 1 of the horizontal machine tool 102", or may be erected on the floor surface outside of the horizontal machine tool 102". The track 81 is disposed in parallel with the X-axis above the automatic tool changer 7' and at the position having the same height as the upper ends of the columns 5' or at the position lower than that. In Figs. 18, 20, and 21, part of the track 81 is illustrated.

The moving body 82 is engaged with the track 81, and moves along the track 81 or stops by conveying means, not illustrated. The work hand 83 and the turning head 84 are disposed to the moving body 82. Specifically, the turning head 84 is mounted to the moving body 82, and the work hand 83 is mounted to the end of the turning head 84. That is, the turning head 84 is interposed between the moving body 82 and the work hand 83. The work hand 83 holds the workpiece W by chucks 83a, and releases the holding.

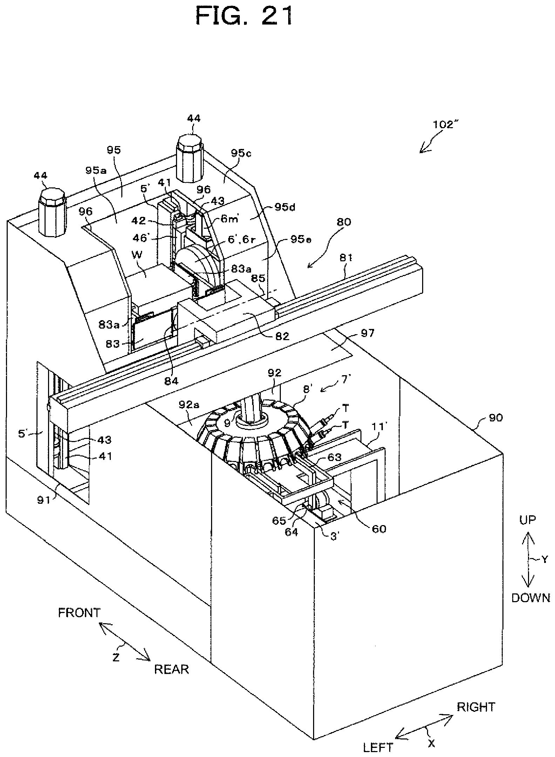

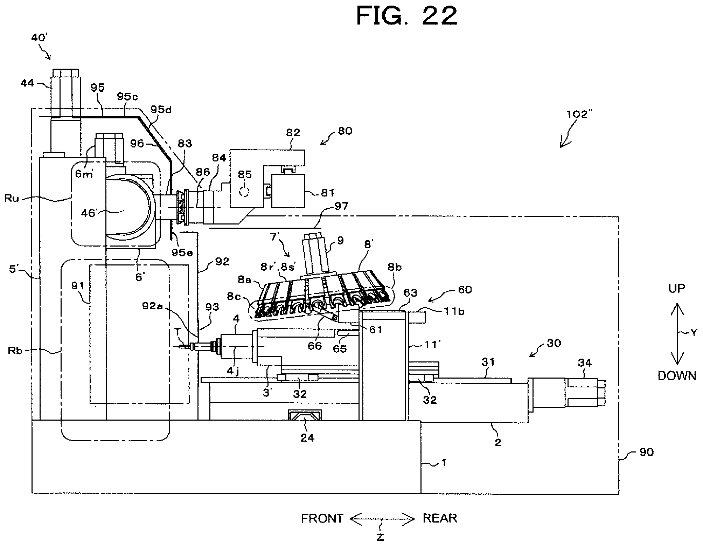

The turning head 84 turns 90° in the YZ plane including the Y-axis and the Z-axis about a turning shaft 85 (Fig. 18) parallel to the X-axis. A driving mechanism (not illustrated) turning the turning head 84 is provided in the moving body 82. With the turning of the turning head 84, the work hand 83 moves into or out of the loading/unloading region Ru. A state where the turning head 84 is rotated 90° about the rotating shaft 85 from the state in Figs. 18 to 20 is illustrated in Figs. 21 and 22. With the turning of the turning head 84, the workpiece W held by the work hand 83 turns about the turning shaft 85, and moves into or out of the loading/unloading region Ru. The turning head 84 is an example of a "movable head" of the present invention.

With the above configuration, the moving body 82 of the workpiece loading/unloading device 80 moves along the track 81, and stops at the position above the automatic tool changer 7' facing the loading/unloading region Ru. That is, the loading/unloading region Ru of the horizontal machine tool 102" is disposed sidewardly of a conveying path in which the workpiece loading/unloading device 80 conveys the workpiece W

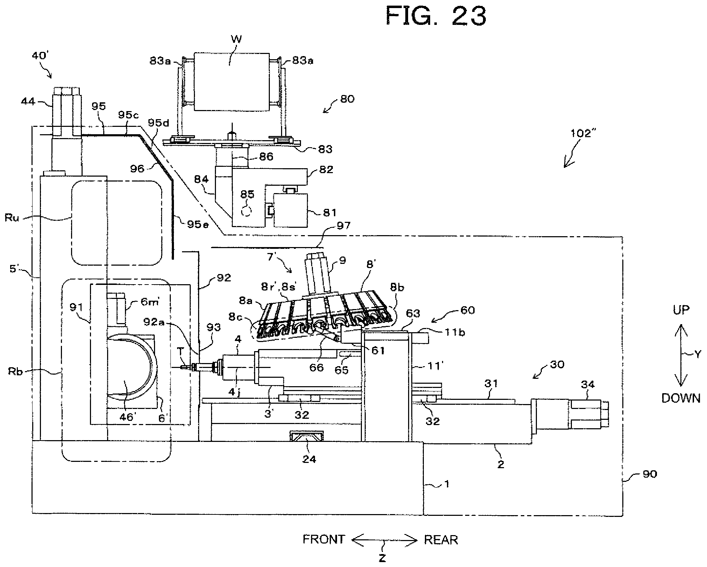

A rotating mechanism (not illustrated) that rotates the work hand 83 about a rotating axis 86 perpendicular to the X-axis is incorporated in the turning head 84. A state where the work hand 83 is rotated 90° about the rotating axis 86 from the state in Fig. 18 is illustrated in Fig. 23. The workpiece W held by the work hand 83 rotates about the rotating axis 86 with the rotation of the work hand 83 to change the posture and direction of the workpiece W The rotating axis 86 is an example of a "second rotating axis" of the present invention.

The cover 90 covers the horizontal machine tool 102", but does not cover the workpiece loading/unloading device 80. In Figs. 19, 22, and 23, to easily see the inner configuration, the cover 90 is indicated by two-dot chain lines.

The windows 91 are disposed in the left and right side surfaces of the cover 90. The window may also be disposed in the front surface of the cover 90 (not illustrated). As illustrated in Fig. 19 and the like, the cover 90 includes the XY plane cover 92, an upper surface cover 97, and a bent cover 95.

The upper surface cover 97 is disposed above the main shaft 4 and the tool magazine 8 so as not to interfere with the workpiece loading/unloading device 80. The upper surface cover 97 protects the horizontal machine tool 102" from the dropping of the workpiece W being conveyed by the workpiece loading/unloading device 80. In Fig. 18 and the like, although the rear portion of the cover 90 is opened to the upper side, the rear portion of the cover 90 is also covered by the separate member, not illustrated, of the cover 90.

As illustrated in Fig. 19, the bent cover 95 is disposed between the columns 5' and the workpiece loading/unloading device 80. The bent cover 95 is formed to be bent in two steps, and includes an XZ plane 95c including the X-axis and the Z-axis, an XY plane 95e including the X-axis and the Y-axis, and a slope 95d between both of the planes 95c and 95e.

The XZ plane 95c is disposed at the height in which the XZ plane 95c does not interfere with the Y-axis moving mechanism 40', the columns 5', the table 6', and the workpiece W. The XY plane 95e is disposed at the position on the Z-axis in which the XY plane 95e does not interfere with the Y-axis moving mechanism 40', the table 6', and the workpiece loading/unloading device 80. The slope 95d is disposed at the position in which the slope 95d does not interfere with the workpiece loading/unloading device 80.

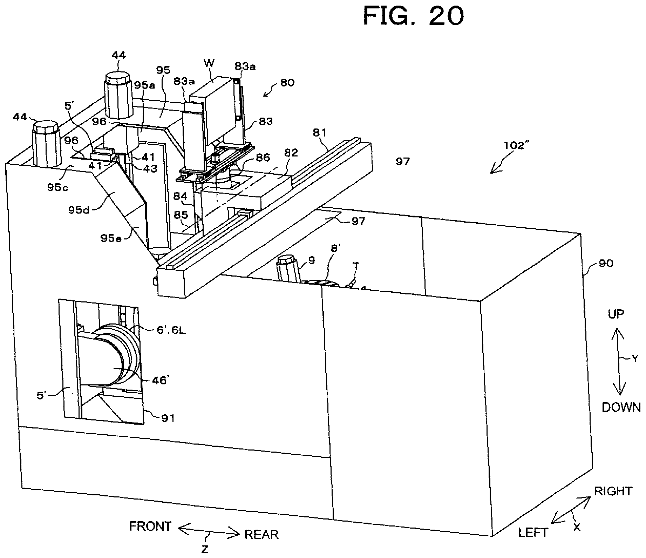

As illustrated in Fig. 20 and the like, in the bent cover 95, an opening 95a for moving the work hand 83 into or out of the loading/unloading region Ru is formed across the respective surfaces 95c to 95e. The opening 95a is opened or closed by double bent doors 96. The bent doors 96 move in the X-axis direction to open or close the opening 95a.

When loading the workpiece W and placing it onto the table 6', first, the workpiece W is held by the work hand 83 of the workpiece loading/unloading device 80, then the work hand 83 is turned by the turning head 84, and is brought into an upward vertical posture (Figs. 18 and 19). Next, the moving body 82 is moved along the track 81 to above the automatic tool changer 7', and is positioned at the loading/unloading position in the X-axis direction. Next, the opening 95a of the bent cover 95 is opened (Fig. 20), and the table 6' is raised to the loading/unloading region Ru by the Y-axis moving mechanism 40', and is positioned at the loading/unloading position in the Y-axis direction.

Then, the work hand 83 is turned by the turning head 84, so that the work hand 83 and the workpiece W are moved into the loading/unloading region Ru. Further, the work hand 83 is brought into a lateral horizontal posture, and the workpiece W is placed onto the table 6', and the holding of the workpiece W by the work hand 83 is released (Fig. 21). Thereafter, the table 6' is lowered to the processing region Rb by the Y-axis moving mechanism 40' to fix the workpiece W on the table 6' by a jig. Also, the work hand 83 is turned by the turning head 84, the work hand 83 is retracted from the loading/unloading region Ru, and the opening 95a of the bent cover 95 is closed.

When unloading the workpiece W placed on the table 6', first, the moving body 82 is moved along the track 81 to above the automatic tool changer 7' in a state where the work hand 83 of the workpiece loading/unloading device 80 is in an upward vertical posture, and is positioned at the loading/unloading position in the X-axis direction. Also, the opening 95a of the bent cover 95 is opened, and the table 6' is raised to the loading/unloading region Ru by the Y-axis moving mechanism 40', and is positioned at the loading/unloading position in the Y-axis direction. Also, the fixing of the workpiece W on the table 6' by the jig is released. Next, the work hand 83 is turned by the turning head 84 to move into the loading/unloading region Ru. Then, the work hand 83 is brought into a lateral horizontal posture, and the workpiece W on the table 6' is held by the work hand 83 (Fig. 20).

Thereafter, the work hand 83 is turned by the turning head 84 and retracted from the loading/unloading region Ru, and the workpiece W is taken up from the table 6'. Then, the moving body 82 is moved along the track 81 to the next machine tool in a state where the work hand 83 is brought into an upward vertical posture. The opening 95a of the bent cover 95 is closed after the work hand 83 and the workpiece W are retracted from the loading/unloading region Ru, and the table 6' is lowered to the processing region Rb.

According to the fourth embodiment, since the workpiece loading/unloading device 80 is disposed above the automatic tool changer 7' lower than the columns 5', the height of the entire machine facility is reduced, so that the surrounding visibility can be made more satisfactory. Also, since the work hand 83 is moved into or out of the loading/unloading region Ru by turning the turning head 84 of the workpiece loading/unloading device 80, the workpiece W can be placed onto or taken up from the table 6 raised to the loading/unloading region Ru. Also, since the work hand 83 does not move vertically in the Y-axis direction, the height of the workpiece loading/unloading device 80 can be reduced.

In the fourth embodiment, the track 81 is installed at the position displaced rearward from the processing region Rb and the loading/unloading region Ru. Therefore, when the processing state of the workpiece W is checked from the left-right direction of the processing region Rb, the track 81 cannot be an obstacle to the operator even if the height of the track 81 is low, so that the operability can be maintained high.

Furthermore, in the fourth embodiment, the workpiece W held by the work hand 83 can be rotated about the rotating axis 86 perpendicular to the X-axis. Therefore, it is possible to change freely the direction and posture of the workpiece W and re-place it onto the table 6', or convey it to another machine tool. Also, as a result, the processing surface of the workpiece W that can be processed by the horizontal machine tool 102" and another machine tool can be increased. Moreover, it is not necessary to additionally employ a device, such as a station, for converting the posture of the workpiece W.

It is noted that in the workpiece loading/unloading device 80, the driving portion 74 and the rotating axis 75 (Fig. 13 and the like) shown in the third embodiment may be provided in the work hand 83 to rotate the chucks 83a of the work hand 83 about the rotating axis 75.

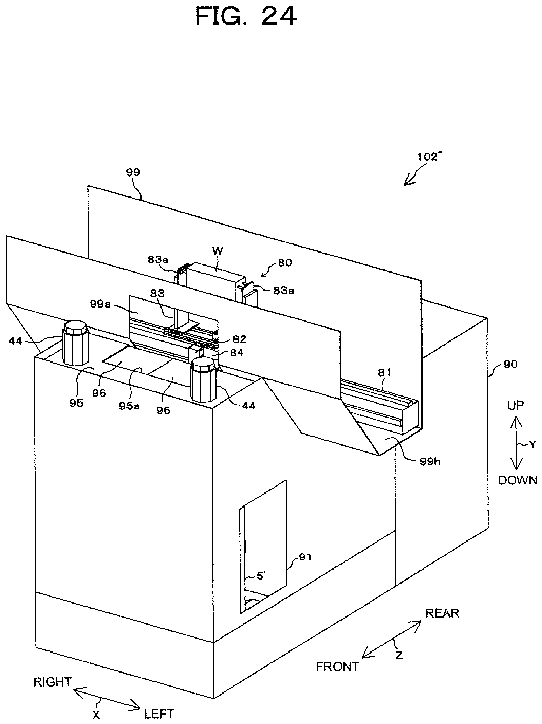

The present invention can adopt various embodiments other than the above embodiments. For example, in the fourth embodiment, as illustrated in Fig. 19 and the like, the horizontal machine tool 102" is protected from the dropping of the workpiece W by the upper surface cover 97, but the present invention is not limited thereto. Other than this, for example, like a fifth embodiment illustrated in Fig. 24, a protection member 99 that protects the horizontal machine tool 102" from the dropping of the workpiece W may be disposed at the front and rear of, and also below, the workpiece loading/unloading device 80. A passing hole 99a through which the work hand 83 passes during the turning of the turning head 84 is disposed in the protection member 99. As the protection member 99, a net and a plate may be used. In the case where a horizontal portion 99h of the protection member 99 below the workpiece loading/unloading device 80 is made of a plate material without a hole, the automatic tool changer 7' and the main shaft 4 therebelow can be protected from the dropping of a cooling lubricant that adheres onto the workpiece W.

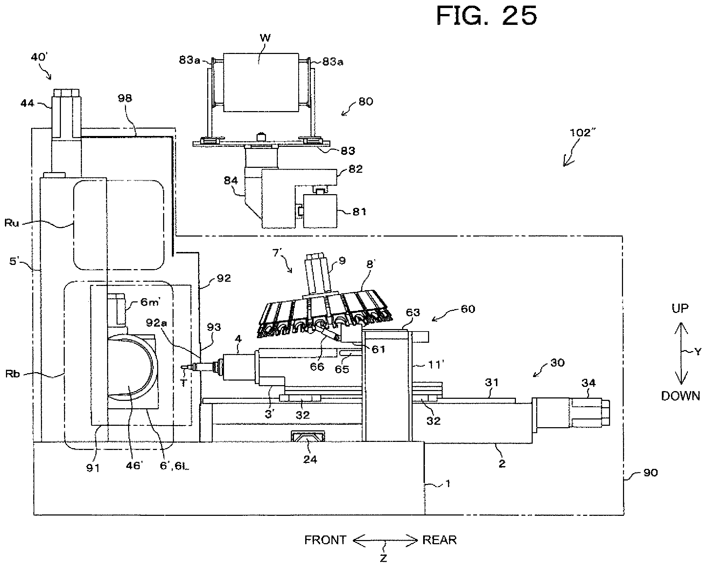

In the fourth embodiment, as illustrated in Fig. 18 and the like, the bent cover 95 bent in two steps is disposed to separate the loading/unloading region Ru and the workpiece loading/unloading device 80, but the present invention is not limited thereto. Other than this, for example, like a sixth embodiment illustrated in Fig. 25, a cover having a different shape, like a bent cover 98 bent in one step, may be disposed. That is, the cover is disposed so as not to interfere with the respective portions of the horizontal machine tool and the workpiece loading/unloading device, so that the horizontal machine tool can be protected.

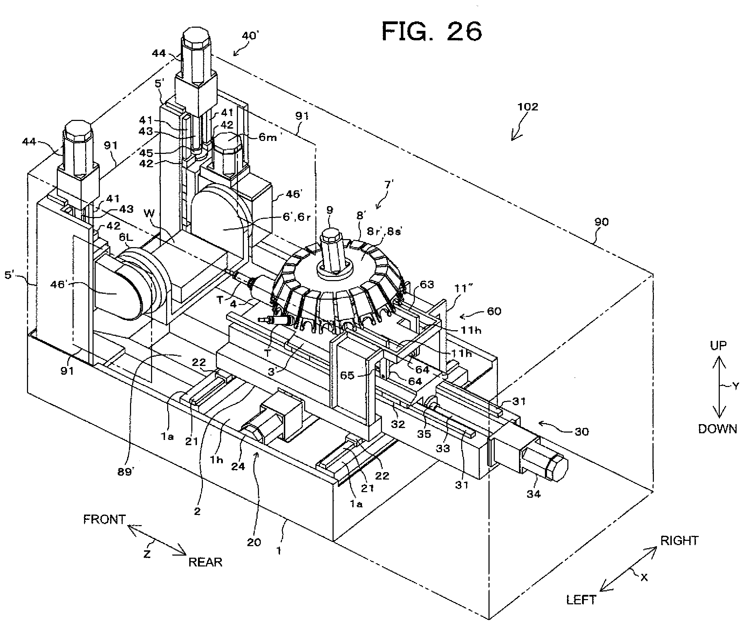

In the first embodiment, the automatic tool changer 7 is mounted to the mounting base 11 erected on the bed 1, and in the second embodiment, the automatic tool changer 7' is mounted to the mounting base 11' erected on the bed 1, but the present invention is not limited thereto. Other than these, for example, like a seventh embodiment illustrated in Fig. 26, the automatic tool changer 7' may be mounted to a gate-shaped mounting base 11" erected on the saddle 2. As the mounting configuration, for example, the configuration shown in the second embodiment may be adopted.

According to this, the automatic tool changer 7' is movable in the X-axis direction with the saddle 2. Consequently, regardless of the position of the main shaft head 3' on the X-axis, the tool T mounted on the main shaft 4 and the desired tool T held by the tool magazine 8' can be replaced, so that the faster tool replacement can be realized. As another example, the mounting base mounting the automatic tool changer may be erected on the main shaft head. In this case, the same effect as above can be also obtained.

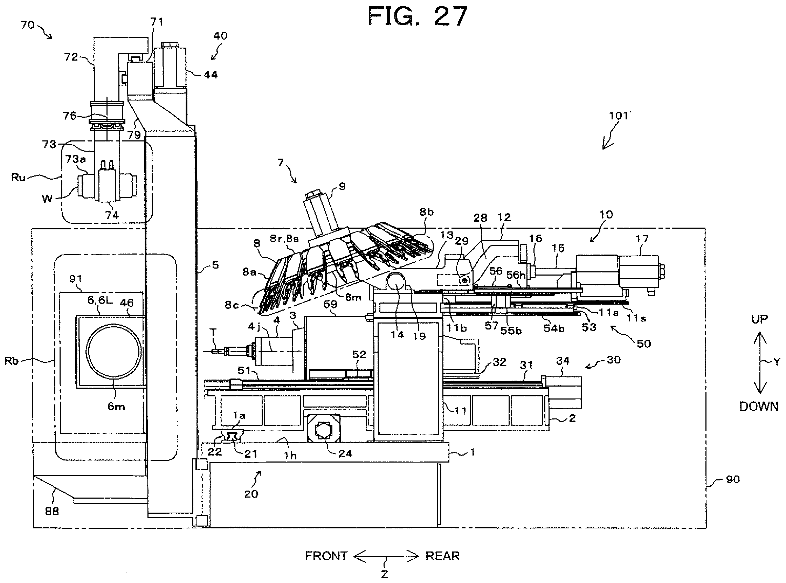

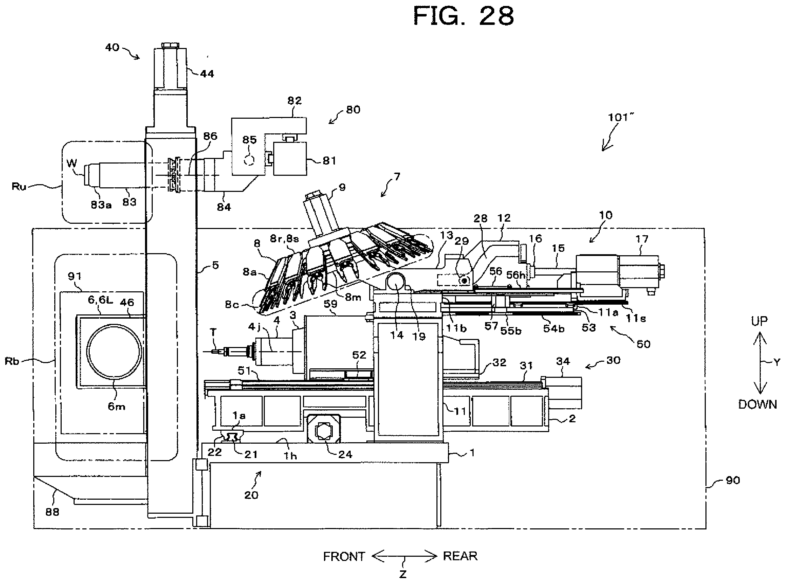

In the third embodiment and the fourth embodiment, the workpiece loading/unloading devices 70 and 80 are further provided in the horizontal machine tools 102' and 102" (Figs. 12 and 19) in which the processing region Rb is disposed rearwardly of the columns 5' (saddle 2 side), but the present invention is not limited thereto. Other than these, for example, like an eighth embodiment illustrated in Fig. 27 and a ninth embodiment illustrated in Fig 28, the workpiece loading/unloading devices 70 and 80 may be further provided in a horizontal machine tools 101' and 102" in which the processing region Rb is disposed forwardly of the columns 5 (the opposite side of the saddle 2).

In that case, the loading/unloading region Ru is disposed above the processing region Rb of the machine tools 101' and 101", and the table 6 is moved to the processing region Rb and the loading/unloading region Ru by the Y-axis moving mechanism 40. The workpiece loading/unloading devices 70 and 80 are installed above the loading/unloading region Ru and above the automatic tool changer 7, and load or unload the workpiece W onto or from the table 6 in the loading/unloading region Ru. The columns 5 are formed in a size in which the columns 5 do not interfere with the workpiece loading/unloading devices 70 and 80 while the loading/unloading region Ru is disposed on the upper side and the processing region Rb are disposed on the lower side. The configuration of the horizontal machine tools 101' and 101" other than the above is the same as the horizontal machine tool 101 of the first embodiment.

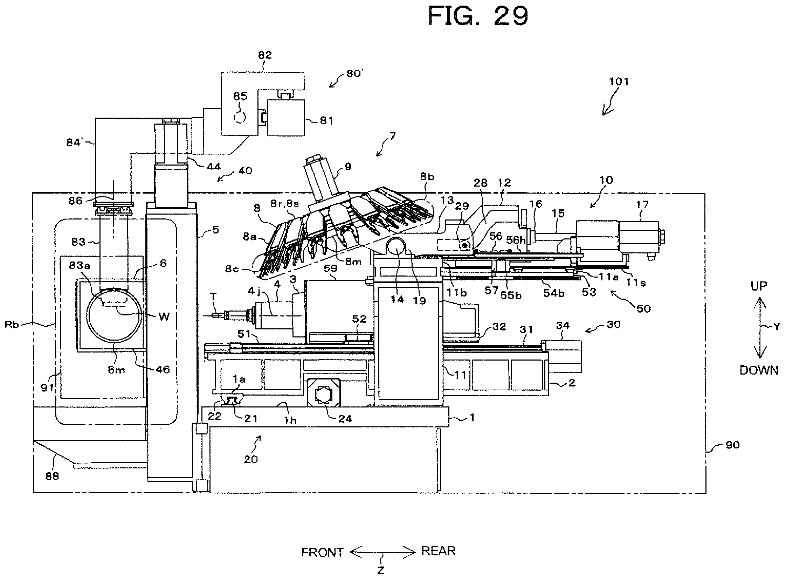

As in a tenth embodiment illustrated in Fig. 29, a workpiece loading/unloading device 80' having a turning head 84' bent in an inverted L-shape may be provided in the horizontal machine tool 101. The turning head 84' is bent in an inverted L-shape in the YZ plane including the Y-axis and the Z-axis. The base of the turning head 84' is held by the moving body 82 through the turning shaft 85. The work hand 83 is mounted on the end of the turning head 84'. That is, the turning head 84' is interposed between the moving body 82 and the work hand 83. The turning head 84' is turned in the YZ plane about the turning shaft 85. A driving mechanism (not illustrated) that turns the turning head 84' is provided in the moving body 82. The configuration of the workpiece loading/unloading device 80' other than the turning head 84' is the same as the above-described workpiece loading/unloading device 80. After the moving body 82 moves along the track 81 and stops above the automatic tool changer 7, the turning head 84' turns in the YZ plane about the turning shaft 85, whereby the work hand 83 moves into or out of the processing region Rb. The turning head 84' is an example of a "movable head" of the present invention.

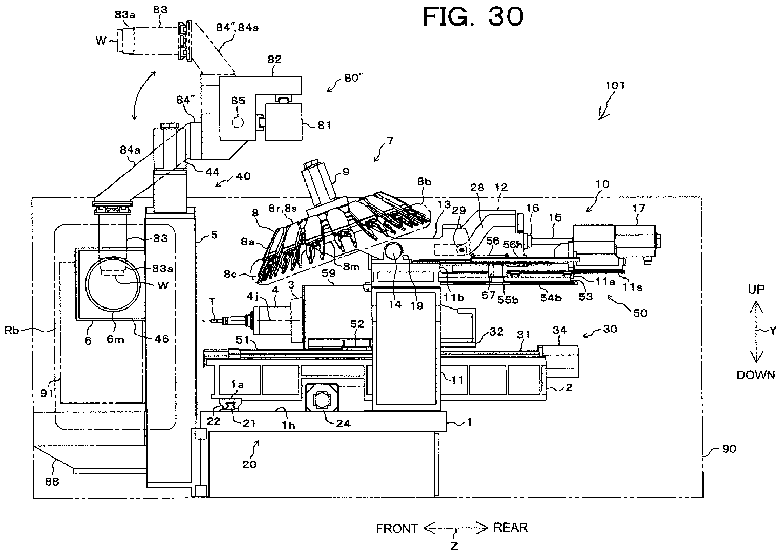

As in an eleventh embodiment illustrated in Fig. 30, a workpiece loading/unloading device 80" having a turning expansion/contraction head 84" that moves diagonally with expansion or contraction while turning in the YZ plane including the Y-axis and the Z-axis may be provided in the horizontal machine tool 101. The base of the turning expansion/contraction head 84" is held by the moving body 82 through the turning shaft 85. The work hand 83 is mounted on the end of the turning expansion/contraction head 84". That is, the turning expansion/contraction head 84" is interposed between the moving body 82 and the work hand 83. An arm 84a at the center of the turning expansion/contraction head 84" expands or contracts diagonally in the YZ plane. A driving mechanism (not illustrated) that turns the turning expansion/contraction head 84" is provided in the moving body 82. Also, a driving mechanism (not illustrated) that expands or contracts the arm 84a of the turning expansion/contraction head 84" is provided in the arm 84a. In Fig. 30, a state where the turning expansion/contraction head 84" turns upward and the arm 84a contracts is indicated by two-dot chain lines, and a state where the turning expansion/contraction head 84" turns downward and the arm 84a expands is indicated by solid lines (dashed lines in part). The configuration of the workpiece loading/unloading device 80" other than the turning expansion/contraction head 84" is the same as the workpiece loading/unloading device 80. After the moving body 82 moves along the track 81 to stop above the automatic tool changer 7, the turning expansion/contraction head 84" turns in the YZ plane about the turning shaft 85, and the arm 84a extends or contracts diagonally in the YZ plane. With this, the work hand 83 moves into or out of the processing region Rb. The turning expansion/contraction head 84" is an example of a "movable head" of the present invention.

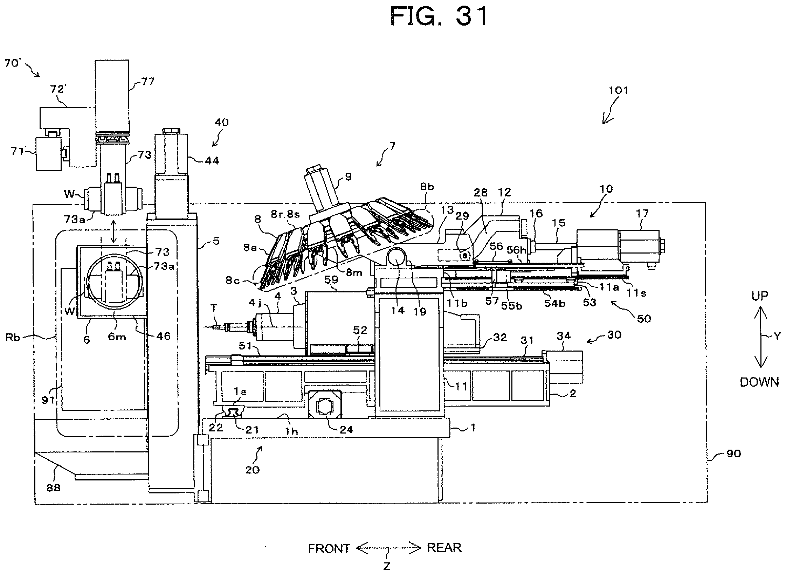

As in a twelfth embodiment illustrated in Fig. 31, a workpiece loading/unloading device 70' having a Y-axis movable head 77 moving in the Y-axis direction may be provided in the horizontal machine tool 101. The Y-axis movable head 77 is held by a moving body 72' so as to be movable in the Y-axis direction (movable up and down). A driving mechanism (not illustrated) that moves the Y-axis movable head 77 in the Y-axis direction is provided in the moving body 72'. The moving body 72' moves along a track 71'. The track 71' is disposed laterally in front of the columns 5 and above the processing region Rb, and is supported by a strut, not illustrated. The work hand 73 is mounted on the lower end of the Y-axis movable head 77. That is, the Y-axis movable head 77 is interposed between the moving body 72' and the work hand 73. Other configuration of the workpiece loading/unloading device 70' is the same as the above-described workpiece loading/unloading device 70. After the moving body 72' moves along the track 71' and stops above the processing region Rb, the Y-axis movable head 77 moves in the Y-axis direction, whereby the work hand 73 moves into or out of the processing region Rb. In Fig. 31, a state where the Y-axis movable head 77 rises and the work hand 73 retracts from the processing region Rb is indicated by solid lines, and a state where the Y-axis movable head 77 lowers and the work hand 73 moves into the processing region Rb is indicated by two-dot chain lines.

According to the tenth to twelfth embodiments, the workpiece W can be loaded onto or unloaded from the table 6 in the processing region Rb by the workpiece loading/unloading devices 80', 80", and 70' even without disposing the loading/unloading region aside from the processing region Rb. Hence, the height of the columns 5 can be reduced to the extent that the processing region Rb can be disposed, and also the height of the horizontal machine tool 101 itself can be reduced, so that the surrounding visibility can be made satisfactory.

Also, since the loading/unloading position in the Y-axis direction is set in the processing region Rb, the amount of movement of the table 6 during the loading or unloading can be reduced, and the time to load or unload the workpiece W can be shortened. Moreover, when the heads 84', 84", and 77 are operated in the processing region Rb without moving the table 6 in the Y-axis direction, the workpiece W can be placed onto or taken up from the table 6 by the work hands 83 and 73. In this case, the number of operation steps during the loading or unloading can be reduced.

As another example, the workpiece loading/unloading device 80' in Fig. 29 and the workpiece loading/unloading device 80" in Fig. 30 may be disposed in the horizontal machine tool 102 of the second embodiment. Also in this case, only the processing region Rb is disposed in the horizontal machine tool 102, and the same effect as above can be obtained.

As a further example, in the horizontal machine tools 102" and 101" illustrated in Figs. 19 and 28 in which the loading/unloading region Ru is disposed above the processing region Rb, the workpiece loading/unloading device 80" in Fig. 30 may be provided in place of the workpiece loading/unloading device 80. In this case, by reducing the height of the columns 5 and 5' and the height of the loading/unloading region Ru, the amount of movement of the table 6 during the loading or unloading can be reduced, and the time to load or unload the workpiece W can be shortened.

As a still another example, a movable head that does not turn but expands or contracts or slides diagonally in the YZ plane may be provided in the workpiece loading/unloading device, and this workpiece loading/unloading device may be applied to the horizontal machine tool in which, of the processing region and the loading/unloading region, at least the processing region is disposed. Specifically, in Fig. 30, the positions of the moving body 82 and the track 81 are displaced rearward (in the drawing, to the right side) to the extent that the work hand 83 and the workpiece W can pass between the driving motor 44 and the moving body 82. The turning mechanism of the head 84" is omitted, and the length of the expanded arm 84a is increased to the extent that the work hand 83 can move into or out of the processing region Rb. Alternatively, in place of the moving body 82 and the head 84", the moving body 72' and the head 77 in Fig. 31 may be applied, in a tilting state, to the workpiece loading/unloading device 80" in Fig. 30. In this case, the head 77 is moved diagonally with sliding in the YZ plane so that the work hand 83 can move into or out of the processing region Rb.

The tunnel cover 59 illustrated in the first embodiment is not illustrated in other embodiments, but likewise, also in other embodiments, it is preferable to dispose the tunnel cover covering the main shaft head between the tool magazine and the saddle. In that case, the tunnel cover is moved in the Z-axis direction with the swinging of the tool magazine.

In the third embodiment, the work hand 73 of the workpiece loading/unloading device 70 rotates about the rotating axes 75 and 76, but the present invention is not limited thereto. Other than this, one or both of the rotation mechanism around the two rotating axes 75 and 76 may be omitted to achieve the simplification and weight reduction of the workpiece loading/unloading device.

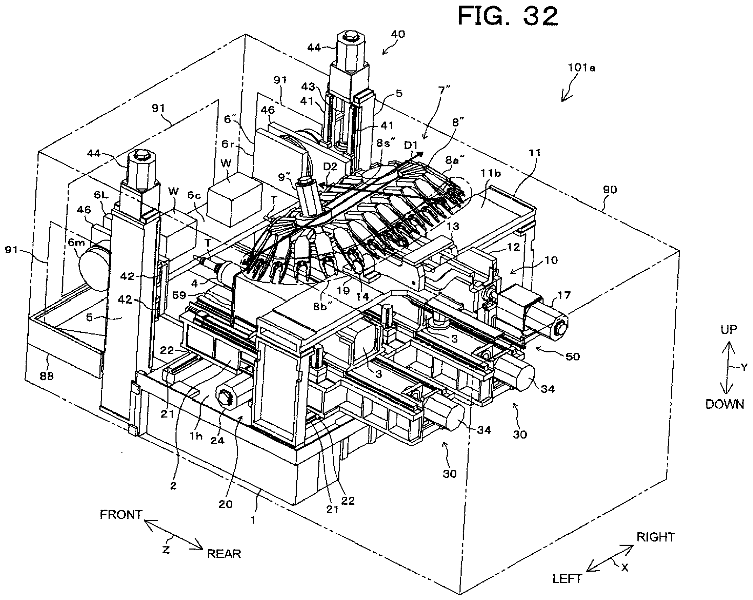

In the above embodiments, the disc-shaped tool magazines 8 and 8' are disposed in the automatic tool changers 7 and 7', but the present invention is not limited thereto. In place of these, for example, as in a thirteenth embodiment illustrated in Fig. 32, a tool magazine 8" formed in an oval disc shape in which, of two orthogonal diameters D1 and D2, one diameter D1 is longer than the other diameter D2 may be provided in an automatic tool changer 7".

In the tool magazine 8" in Fig. 32, a plurality of holding portions 8b" radially holding the tools are formed on the end of an outer periphery 8a". The plurality of holding portions 8b" are aligned in parallel with the longer diameter D1 of two orthogonal diameters D1 and D2. Also, a plurality of replacing positions of the tool magazine 8" at which the tool T is replaced between the tool magazine 8" and the main shaft 4 are aligned in the front portion of the tool magazine 8" in parallel with the longer diameter D1. Although not illustrated, the respective holding portions 8b" are joined to a chain, and the chain is spanned between a pair of sprockets. By rotating one of the sprockets by a motor 9", the respective holding portions 8b" move while rotating along the outer periphery 8a", so that the desired tool held by the holding portion 8b" is sent out to any one of the plurality of replacing positions.

The tool magazine 8" is, with the configuration illustrated in the first embodiment, disposed above the main shaft head 3 of a horizontal machine tool 101a. Specifically, the tool magazine 8" is disposed above the main shaft head 3 so that a reference surface 8s" parallel to the directions of diameters D1 and D2 of the tool magazine 8" is lateral (or diagonally lateral) with respect to the Z-axis and that the diameter D1 is parallel to the X-axis.

In the horizontal machine tool 101a in Fig. 32, two main shafts 4, two main shaft heads 3, and two Z-axis moving mechanisms 30 are provided (the main shaft 4 on the right side is not illustrated in Fig. 32). A table 6" has a size in which two workpieces W can be placed to be aligned in the X-axis direction. Each workpiece W is processed by the tool T mounted on each main shaft 4. The configuration of the horizontal machine tool 101a other than these is the same as the horizontal machine tool 101 of the first embodiment.

During the tool replacement, for example, the desired tool T in the tool magazine 8" is moved to the replacing position that is closest to the main shaft 4 on which the tool T to be replaced is mounted without returning each main shaft head 3 to the origin point position on the X-axis. Then, with the movement of the main shaft head 3 in the Z-axis direction by the Z-axis moving mechanism 30, the tool magazine 8" is swung so that each replacing position of the tool magazine 8" approaches or separates from the main shaft 4. In this way, the amount of movement of each main shaft head 3 can be reduced to achieve the faster tool replacement. It is noted that in the case where one of two tools T mounted on the two main shafts 4 is not replaced, the main shaft 4 on which the one tool T is mounted and the main shaft head 3 are retracted rearwardly of the tool replacing position by the Z-axis moving mechanism 30.

As another example, the tool magazine 8" in an oval disc shape may be applied to the horizontal machine tools 101 and 102 as shown in Figs. 1 and 7 having one main shaft 4, one main shaft head 3 and 3', and one Z-axis moving mechanism. Also, the tool magazine 8" may be disposed above the main shaft heads 3 and 3' so that the longer diameter D1 of the tool magazine 8" is perpendicular to the X-axis or tilts at a predetermined angle with respect to the X-axis.

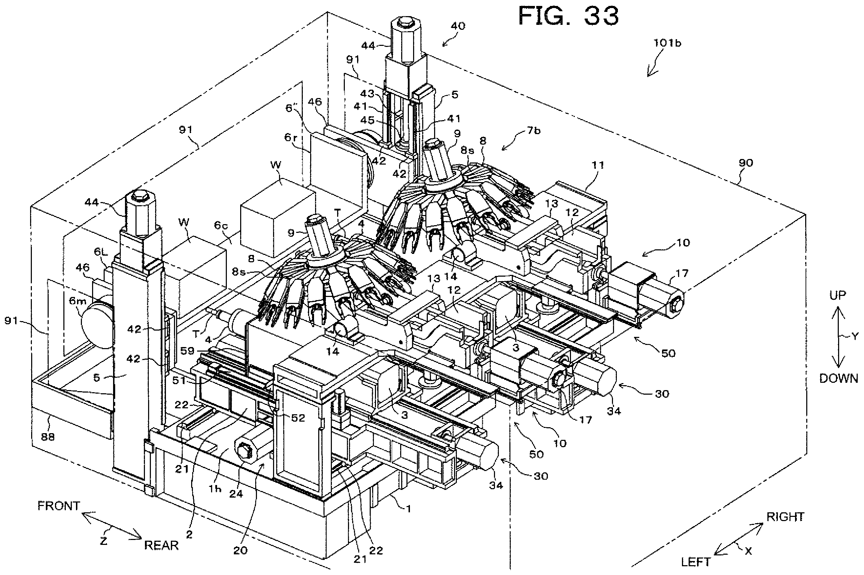

In the above embodiments, the automatic tool changer having one tool magazine is illustrated as an example, but the present invention is not limited thereto. Other than this, for example, as in a fourteenth embodiment illustrated in Fig. 33, an automatic tool changer 7b having a plurality (here, two) of tool magazines 8 may be disposed above the main shaft heads 3 so that the reference surface 8s of each tool magazine 8 is lateral (or diagonally lateral) with respect to the Z-axis.

In a horizontal machine tool 101b in Fig. 33, two tool magazines 8, two rotation motors 9, and two swinging mechanisms 10 are provided in the automatic tool changer 7b. Also, two main shafts 4, two main shaft heads 3, and two Z-axis moving mechanisms 30 are provided. The tool replacement is performed between the main shaft 4 on the left side and the tool magazine 8 on the left side, and between the main shaft 4 on the right side and the tool magazine 8 on the right side. The configuration of the horizontal machine tool 101b other than these is the same as the horizontal machine tool 101 of the first embodiment.

As a further example, the automatic tool changer 7b having the plurality of tool magazines 8 may be applied to the horizontal machine tools 101 and 102 having one main shaft 4, one main shaft head 3 and 3', and one Z-axis moving mechanism 30. Also, the plurality of tool magazines may be swung by the same swinging mechanism.

As a still another embodiment, the automatic tool changer having two or more tool magazines may be applied to the horizontal machine tool in which two or more main shafts and two or more main shaft heads are provided. That is, the present invention is applicable to the horizontal machine tool in which at least one main shaft head, at least one main shaft, and at least one tool magazine are provided. Furthermore, not only the tool magazine in a disc shape or in an oval disc shape but also the tool magazine having other shapes can be applied to the present invention.

In the above embodiments, the pair of left and right columns 5 and 5' are erected on the bed 1, but the present invention is not limited thereto. Other than this, for example, one pillar may be erected on one of the left and right end portions of the bed, and the table may be disposed so as to be movable in the Y-axis direction along the pillar. In this case, although the table is brought into a cantilevering state, the visibility of the processing region can be enhanced. Also, two or more pillars, such as columns, may be erected on the bed. In this case, by coupling the upper ends of two or more pillars with a girder member, the effect of enhancing the straightness rigidity of the pillars can be obtained.

In the above embodiments, the present invention is applied to the machine tool that performs cutting, but the present invention is applicable to the machine tool that performs other processing.

### REFERENCE SIGNS LIST

- 1: Bed
- 2: Saddle
- 3, 3': Main shaft head
- 4: Main shaft
- 4j: Center axis
- 5, 5': Column (pillar)
- 6, 6', 6": Table
- 7, 7', 7", 7b: Automatic tool changer
- 8, 8', 8": Tool magazine
- 8a, 8a": Outer periphery
- 8b, 8b": Holding portion
- 8s, 8s', 8s": Reference surface
- 11, 11', 11": Mounting base
- 13: Holding member
- 14, 62: Swing shaft
- 17: Driving motor (actuator)
- 40, 40': Y-axis moving mechanism
- 46, 46': Carriage
- 59: Tunnel cover
- 60: Swinging mechanism
- 63: Lift link (holding member)
- 70, 80, 70', 80', 80": Workpiece loading/unloading device
- 71, 71', 81: Track
- 72, 72', 82: Moving body
- 73, 83: Work hand
- 77: Y-axis movable head
- 84, 84': Turning head (movable head)
- 84": Turning expansion/contraction head (movable head)
- 75: Rotating axis (first rotating axis)
- 76, 86: Rotating axis (second rotating axis)
- 85: Turning shaft
- 101, 101', 101", 101a, 101b: Horizontal machine tool
- 102, 102', 102": Horizontal machine tool
- D, D1, D2: Diameter of the tool magazine
- Rb: Processing region
- Ru: Loading/unloading region
- T: Tool
- W: Workpiece
- X: X-axis
- Y: Y-axis
- Z: Z-axis

## Claims

1. A horizontal machine tool comprising:
a bed;
a saddle disposed above the bed so as to be movable in a horizontal X-axis direction;
a main shaft head disposed above the saddle so as to be movable in a horizontal Z-axis direction orthogonal to the X-axis;
a main shaft rotatably axially supported by the main shaft head so that a center axis thereof is parallel to the Z-axis and on which a tool is mounted;
a table disposed in front of the saddle and on which a workpiece is placed; and
an automatic tool changer having a tool magazine holding a plurality of tools and replacing the desired tool held by the tool magazine and the tool mounted on the main shaft, **characterized in that**
the automatic tool changer is disposed above the main shaft head so that a reference surface parallel to the diameter direction of the tool magazine is brought into a horizontal state parallel to the Z-axis or into a tilting state at a predetermined angle with respect to the Z-axis.

2. The horizontal machine tool according to claim 1,
wherein at least except when performing the tool replacement, the angle of the reference surface of the tool magazine with respect to the Z-axis is an acute angle.

3. The horizontal machine tool according to claim 2,
wherein the reference surface of the tool magazine tilts at the acute angle with respect to the Z-axis so that the replacing position side of the tool, as compared with the opposite side, is closer to the main shaft head.

4. The horizontal machine tool according to any one of claims 1 to 3, wherein
the horizontal machine tool further includes a mounting base disposed on the bed and above which the automatic tool changer is mounted, and
the automatic tool changer makes the tool magazine approach the main shaft or separates the tool magazine from the main shaft according to the position of the main shaft head in the Z-axis direction, and replaces the tool held by the tool magazine and the tool mounted on the main shaft.

5. The horizontal machine tool according to claim 4,
wherein the automatic tool changer has:
a swing shaft disposed above the mounting base and parallel to the X-axis;
a holding member coupled to the swing shaft and holding a center portion of the tool magazine; and
an actuator swinging the holding member and the tool magazine about the swing shaft.

6. The horizontal machine tool according to claim 4,
wherein the automatic tool changer has:
a swing shaft disposed above the mounting base and parallel to the X-axis;
a holding member coupled to the swing shaft and holding the center portion of the tool magazine; and
a swinging mechanism swinging the holding member and the tool magazine about the swing shaft with the moving force of the main shaft head in the Z-axis direction.

7. The horizontal machine tool according to any one of claims 1 to 6,
wherein the tool magazine is formed in a disc shape, and is provided with a plurality of holding portions radially holding the plurality of tools on an outer periphery thereof.

8. The horizontal machine tool according to any one of claims 1 to 6,
wherein the tool magazine is formed in an oval disc shape in which one of two orthogonal diameters is longer than the other diameter, and is provided with the plurality of holding portions holding the tools in parallel with the one diameter.

9. The horizontal machine tool according to any one of claims 1 to 8,
wherein the automatic tool changer moves in the X-axis direction with the saddle.

10. The horizontal machine tool according to any one of claims 1 to 9,
wherein a tunnel cover covering the main shaft head is disposed between the tool magazine and the saddle.

11. The horizontal machine tool according to any one of claims 1 to 10,
wherein at least one main shaft head, at least one main shaft, and at least one tool magazine are disposed.

12. The horizontal machine tool according to any one of claims 1 to 11, further including:
a pillar erected on the bed in front of the saddle; and
a Y-axis moving mechanism moving the table along the pillar in a vertical Y-axis direction orthogonal to both of the X-axis and the Z-axis.

13. The horizontal machine tool according to claim 12,
wherein the pillar is disposed on at least one of the left and right end portions on the front side of the bed.

14. The horizontal machine tool according to any one of claims 1 to 13, further including a workpiece loading/unloading device placing the workpiece onto the table from above or taking up the workpiece from the table from above.

15. The horizontal machine tool according to claim 14,
wherein the workpiece loading/unloading device has:
a track disposed above the horizontal machine tool and conveying the workpiece;
a moving body moving along the track; and
a work hand disposed to the moving body, holding the workpiece, and releasing the holding.

16. The horizontal machine tool according to claim 15, wherein:
a processing region in which the workpiece is processed is disposed in front of the saddle;
a loading/unloading region in which the workpiece is loaded or unloaded is disposed above the processing region;
the table is movable to the processing region and the loading/unloading region along the pillar erected on the bed in front of the saddle;
the track is disposed above the loading/unloading region; and
the moving body moves along the track so that the work hand moves into or out of the loading/unloading region.

17. The horizontal machine tool according to claim 16,
wherein the track is fixed to the upper portion of the pillar.

18. The horizontal machine tool according to claim 15, wherein:
the processing region in which the workpiece is processed is disposed in front of the saddle;
the track is disposed above the processing region;
the workpiece loading/unloading device further has a Y-axis movable head interposed between the moving body and the work hand and moving in the Y-axis direction; and
after the moving body moves along the track and stops above the processing region, the Y-axis movable head moves in the Y-axis direction so that the work hand moves into or out of the processing region.

19. The horizontal machine tool according to claim 15, wherein:
the processing region in which the workpiece is processed is disposed in front of the saddle;
the loading/unloading region in which the workpiece is loaded or unloaded is disposed above the processing region;
the table is movable to the processing region and the loading/unloading region along the pillar erected on the bed in front of the saddle;
the track is disposed above the automatic tool changer;
the workpiece loading/unloading device further has a movable head interposed between the moving body and the work hand and moving in a YZ plane including the Y-axis and the Z-axis; and
after the moving body moves along the track and stops above the automatic tool changer, the movable head moves in the YZ plane so that the work hand moves into or out of the loading/unloading region.

20. The horizontal machine tool according to claim 15, wherein:
the processing region in which the workpiece is processed is disposed in front of the saddle;
the track is disposed above the automatic tool changer;
the workpiece loading/unloading device further has a movable head interposed between the moving body and the work hand and moving in the YZ plane including the Y-axis and the Z-axis; and
after the moving body moves along the track and stops above the automatic tool changer, the movable head moves in the YZ plane so that the work hand moves into or out of the processing region.

21. The horizontal machine tool according to claim 19 or 20, wherein:
the track is disposed above the processing region, and
the movable head turns in the YZ plane about a turning shaft parallel to the X-axis, or moves diagonally in the YZ plane.

22. The horizontal machine tool according to any one of claims 15 to 21,
wherein the work hand rotates the held workpiece about a first rotating axis parallel to the X-axis, or rotates the held workpiece about a second rotating axis perpendicular to the X-axis.

## Amended claims

### Amended claims under Art. 19.1 PCT

**1.** (Amended) A horizontal machine tool comprising:
a bed;
a saddle disposed above the bed so as to be movable in a horizontal X-axis direction;
a main shaft head disposed above the saddle so as to be movable in a horizontal Z-axis direction orthogonal to the X-axis;
a main shaft rotatably axially supported by the main shaft head so that a center axis thereof is parallel to the Z-axis and on which a tool is mounted;
a table disposed in front of the saddle and on which a workpiece is placed; and
an automatic tool changer having a tool magazine holding a plurality of tools and replacing the desired tool held by the tool magazine and the tool mounted on the main shaft, **characterized in that**
the automatic tool changer is disposed above the main shaft head so that a reference surface parallel to the diameter direction of the tool magazine is brought into a horizontal state parallel to the Z-axis or into a tilting state at a predetermined angle with respect to the Z-axis, and
with the movement of the main shaft head in the Z-axis direction, the automatic tool changer makes the tool magazine approach the main shaft or separates the tool magazine from the main shaft in a vertical Y-axis direction orthogonal to both of the X-axis and the Z-axis while changing the angle of the reference surface with respect to the Z-axis.

**2.** The horizontal machine tool according to claim 1,
wherein at least except when performing the tool replacement, the angle of the reference surface of the tool magazine with respect to the Z-axis is an acute angle.

**3.** The horizontal machine tool according to claim 2,
wherein the reference surface of the tool magazine tilts at the acute angle with respect to the Z-axis so that the replacing position side of the tool, as compared with the opposite side, is closer to the main shaft head.

**4.** (Amended) The horizontal machine tool according to any one of claims 1 to 3, wherein
the horizontal machine tool further includes a mounting base disposed on the bed and above which the automatic tool changer is mounted.

**5.** The horizontal machine tool according to claim 4,
wherein the automatic tool changer has:
a swing shaft disposed above the mounting base and parallel to the X-axis;
a holding member coupled to the swing shaft and holding a center portion of the tool magazine; and
an actuator swinging the holding member and the tool magazine about the swing shaft.

**6.** The horizontal machine tool according to claim 4,
wherein the automatic tool changer has:
a swing shaft disposed above the mounting base and parallel to the X-axis;
a holding member coupled to the swing shaft and holding the center portion of the tool magazine; and
a swinging mechanism swinging the holding member and the tool magazine about the swing shaft with the moving force of the main shaft head in the Z-axis direction.

**7.** The horizontal machine tool according to any one of claims 1 to 6,
wherein the tool magazine is formed in a disc shape, and is provided with a plurality of holding portions radially holding the plurality of tools on an outer periphery thereof.

**8.** The horizontal machine tool according to any one of claims 1 to 6,
wherein the tool magazine is formed in an oval disc shape in which one of two orthogonal diameters is longer than the other diameter, and is provided with the plurality of holding portions holding the tools in parallel with the one diameter.

**9.** The horizontal machine tool according to any one of claims 1 to 8,
wherein the automatic tool changer moves in the X-axis direction with the saddle.

**10.** The horizontal machine tool according to any one of claims 1 to 9,
wherein a tunnel cover covering the main shaft head is disposed between the tool magazine and the saddle.

**11.** The horizontal machine tool according to any one of claims 1 to 10,
wherein at least one main shaft head, at least one main shaft, and at least one tool magazine are disposed.

**12.** The horizontal machine tool according to any one of claims 1 to 11, further including:
a pillar erected on the bed in front of the saddle; and
a Y-axis moving mechanism moving the table along the pillar in a vertical Y-axis direction orthogonal to both of the X-axis and the Z-axis.

**13.** The horizontal machine tool according to claim 12,
wherein the pillar is disposed on at least one of the left and right end portions on the front side of the bed.

**14.** The horizontal machine tool according to any one of claims 1 to 13, further including a workpiece loading/unloading device placing the workpiece onto the table from above or taking up the workpiece from the table from above.

**15.** The horizontal machine tool according to claim 14,
wherein the workpiece loading/unloading device has:
a track disposed above the horizontal machine tool and conveying the workpiece;
a moving body moving along the track; and
a work hand disposed to the moving body, holding the workpiece, and releasing the holding.

**16.** The horizontal machine tool according to claim 15, wherein:
a processing region in which the workpiece is processed is disposed in front of the saddle;
a loading/unloading region in which the workpiece is loaded or unloaded is disposed above the processing region;
the table is movable to the processing region and the loading/unloading region along the pillar erected on the bed in front of the saddle;
the track is disposed above the loading/unloading region; and
the moving body moves along the track so that the work hand moves into or out of the loading/unloading region.

**17.** The horizontal machine tool according to claim 16,
wherein the track is fixed to the upper portion of the pillar.

**18.** The horizontal machine tool according to claim 15, wherein:
the processing region in which the workpiece is processed is disposed in front of the saddle;
the track is disposed above the processing region;
the workpiece loading/unloading device further has a Y-axis movable head interposed between the moving body and the work hand and moving in the Y-axis direction; and
after the moving body moves along the track and stops above the processing region, the Y-axis movable head moves in the Y-axis direction so that the work hand moves into or out of the processing region.

**19.** The horizontal machine tool according to claim 15, wherein:
the processing region in which the workpiece is processed is disposed in front of the saddle;
the loading/unloading region in which the workpiece is loaded or unloaded is disposed above the processing region;
the table is movable to the processing region and the loading/unloading region along the pillar erected on the bed in front of the saddle;
the track is disposed above the automatic tool changer;
the workpiece loading/unloading device further has a movable head interposed between the moving body and the work hand and moving in a YZ plane including the Y-axis and the Z-axis; and
after the moving body moves along the track and stops above the automatic tool changer, the movable head moves in the YZ plane so that the work hand moves into or out of the loading/unloading region.

**20.** The horizontal machine tool according to claim 15, wherein:
the processing region in which the workpiece is processed is disposed in front of the saddle;
the track is disposed above the automatic tool changer;
the workpiece loading/unloading device further has a movable head interposed between the moving body and the work hand and moving in the YZ plane including the Y-axis and the Z-axis; and
after the moving body moves along the track and stops above the automatic tool changer, the movable head moves in the YZ plane so that the work hand moves into or out of the processing region.

**21.** The horizontal machine tool according to claim 19 or 20, wherein:
the track is disposed above the processing region, and
the movable head turns in the YZ plane about a turning shaft parallel to the X-axis, or moves diagonally in the YZ plane.

**22.** The horizontal machine tool according to any one of claims 15 to 21,
wherein the work hand rotates the held workpiece about a first rotating axis parallel to the X-axis, or rotates the held workpiece about a second rotating axis perpendicular to the X-axis.

Statement under Art. 19.1 PCT
In claim 1, the sentence (last paragraph)
 "the automatic tool changer is disposed above the main shaft head so that a reference
 surface parallel to the diameter direction of the tool magazine is brought into a horizontal state parallel to the Z-axis or into a tilting state at a predetermined angle with respect to the Z-axis"
 has been changed to
 "the automatic tool changer is disposed above the main shaft head so that a reference surface parallel to the diameter direction of the tool magazine is brought into a horizontal state parallel to the Z-axis or into a tilting state at a predetermined angle with respect to the Z-axis, and
 with the movement of the main shaft head in the Z-axis direction, the automatic tool changer makes the tool magazine approach the main shaft or separates the tool magazine from the main shaft in a vertical Y-axis direction orthogonal to both of the X-axis and the Z-axis while changing the angle of the reference surface with respect to the Z-axis".

The above underlined amendment is based on the paragraphs [0084] to [0091] and [0095] of the description as filed.

In claim 4, the sentence
 ", and
 the automatic tool changer makes the tool magazine approach the main shaft or separates the tool magazine from the main shaft according to the position of the main shaft head in the Z-axis direction, and replaces the tool held by the tool magazine and the tool mounted on the main shaft"
 has been deleted in accordance with the amendment of claim 1.
